# EUROPEAN PATENT APPLICATION

(11) **EP 3 190 800 A1**
(43) Date of publication of application: **12.07.2017**
(21) Application number: 15838377.8
(22) Date of filing: 17.06.2015
(51) Int. Cl.: H04N 21/45, H04N 21/43, H04N 21/8549

(54) **IMAGE PROVIDING DEVICE AND METHOD FOR OPERATING SAME**

(30) Priority: 02.09.2014 KR 20140116310
(71) Applicant: LG Electronics Inc. -1-, Seoul 07336 (KR)
(72) Inventor: LEE, Junggi, Seoul 137-893 (KR); PAKR, Byungjun, Seoul 137-893 (KR); KANG, Dongjin, Seoul 137-893 (KR)
(74) Representative: Cabinet Plasseraud
(86) International application number: PCT/KR2015/006143
(87) International publication number: WO 2016/035983

(57) **Abstract**

The present invention relates to an image providing device and a method for operating the same. The image providing device according to an embodiment of the present invention comprises: a broadcasting receiver to receive broadcast signals; an interface unit to receive, from a server, broadcasting preview information comprising a thumbnail image; and a controller to provide a broadcast image on the basis of the received broadcast signals, to provide the thumbnail image associated with the received broadcasting preview information, to provide the broadcasting preview image corresponding to the thumbnail image in the event the thumbnail image is selected, and to play and provide the broadcasting preview image in the event that a play command regarding the broadcasting preview information is inputted. As such, a user can watch a broadcasting preview.

## Description

### Technical Field

The present disclosure relates to an image providing apparatus and a method for operating the same, and more particularly, to an image providing apparatus for enabling viewing of a broadcast trailer, and a method for operating the same.

### Background Art

An image providing apparatus is equipped with a function of providing an image viewable to a user. The user may view a broadcast program through the image providing apparatus. The image providing apparatus provides a user-selected broadcast program among broadcast signals transmitted by broadcasting stations, and displays a broadcast image on a display. At present, broadcasting has been shifted from analog broadcasting to digital broadcasting all over the world.

Digital broadcasting refers to broadcasting digital audio and video signals. Compared to analog broadcasting, digital broadcasting offers the benefits of little data loss attributed to robustness against external noise, easy error correction, high resolution, and clear screen. Furthermore, digital broadcasting enables bi-directional services, unlike analog broadcasting.

### Disclosure

### Technical Problem

An object of the present disclosure is to provide an image providing apparatus for enabling viewing of a broadcast trailer, and a method for operating the same.

### Technical Solution

In an aspect of the present disclosure, an image providing apparatus includes a broadcasting receiver to receive a broadcast signal, an interface unit to receive broadcast trailer information including a thumbnail image from a server, and a controller to provide a broadcast image based on the received broadcast signal, providing the thumbnail image related to the received broadcast trailer information, upon selection of the thumbnail image, to provide a broadcast trailer image corresponding to the thumbnail image, and in response to a play input for the broadcast trailer image, to play and provide the broadcast trailer image.

In another aspect of the present disclosure, an image providing apparatus includes a broadcasting receiver to receive a broadcast signal, an interface unit to receive broadcast trailer information including a thumbnail image from a server, and a controller to provide a broadcast image based on the received broadcast signal, and to provide an electronic program guide (EPG) screen in response to an EPG display input. The EPG screen includes a trailer item for a broadcast program item having the broadcast trailer information.

In another aspect of the present disclosure, a method for operating an image providing apparatus includes receiving a broadcast signal, providing a broadcast image based on the received broadcast signal, receiving broadcast trailer information including a thumbnail image from a server, providing the thumbnail image related to the received broadcast trailer information, upon selection of the thumbnail image, to provide a broadcast trailer image corresponding to the thumbnail image, and in response to a play input for the broadcast trailer image, to play and provide the broadcast trailer image.

### Advantageous Effects

According to an embodiment of the present disclosure, an image providing apparatus includes a broadcasting receiver to receive a broadcast signal, an interface unit to receive broadcast trailer information including a thumbnail image from a server, and a controller to provide a broadcast image based on the received broadcast signal, providing the thumbnail image related to the received broadcast trailer information, upon selection of the thumbnail image, to provide a broadcast trailer image corresponding to the thumbnail image, and in response to a play input for the broadcast trailer image, to play and provide the broadcast trailer image. Therefore, the broadcast trailer may be viewed.

Particularly, upon input of an OK key of a remote controller in a state where a broadcast program has ended and then an advertisement image has been provided, a trailer item is provided along with information about the next broadcast program. Therefore, a user may simply play and view a trailer image. Further, since the user may determine whether to view the next broadcast program of the same channel or switch to another channel, immediately after viewing the trailer image, the use convenience of the user may be increased.

According to another embodiment of the present disclosure, an image providing apparatus includes a broadcasting receiver to receive a broadcast signal, an interface unit to receive broadcast trailer information including a thumbnail image from a server, and a controller to provide a broadcast image based on the received broadcast signal, and to provide an electronic program guide (EPG) screen in response to an EPG display input. The EPG screen includes a trailer item for a broadcast program item having the broadcast trailer information. As the image providing apparatus includes the controller that plays and provides a broadcast trailer image, the user may view the broadcast trailer image.

### Brief Description of the Drawings

FIG. 1a is a view illustrating an image display system according to an embodiment of the present disclosure.
FIG. 1b is a view illustrating an image display system according to another embodiment of the present disclosure.
FIG. 2 is an exemplary internal block diagram of an image providing apparatus illustrated in FIG. 1a.
FIG. 3 is an internal block diagram of a controller illustrated in FIG. 2.
FIG. 4 is a view illustrating a method for controlling a remote controller illustrated in FIG. 2.
FIG. 5 is an internal block diagram of the remote controller illustrated in FIG. 2.
FIG. 6 is a flowchart illustrating an exemplary method for operating an image providing apparatus according to an embodiment of the present disclosure.
FIGS. 7a to 16e are views referred to for describing the operation method illustrated in FIG. 6.

### Best Mode for Carrying Out the Invention

The present disclosure will be described in detail with reference to the attached drawings.

The postfixes attached to the names of components, "module" and "unit" are used simply for the convenience of description, and thus they should not be considered as having specific meanings or roles. Accordingly, the terms "module" and "unit" may be used interchangeably.

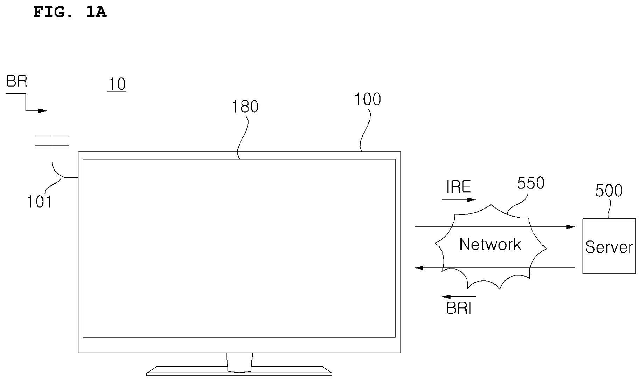

FIG. 1a illustrates an image display system according to an embodiment of the present disclosure.

Referring to FIG. 1a, an image display system 10 may include an image providing apparatus 100 and a server 500.

The image providing apparatus 100 may receive a broadcast signal (BR) through an antenna 101, process the received BR, provide a broadcast image, and display the provided broadcast image. For this purpose, the image providing apparatus 100 may include a display 180.

That is, the image providing apparatus 100 illustrated in FIG. 1a may cover an image display apparatus such as a TV or a monitor in concept.

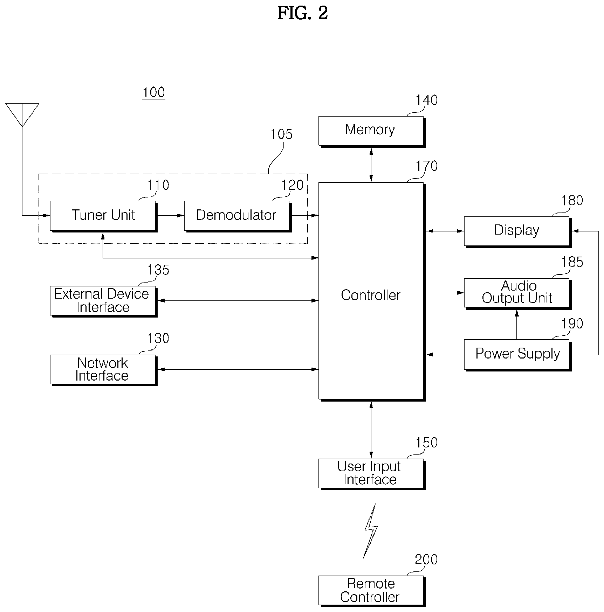

Meanwhile, the image providing apparatus 100 may exchange data with the server 500 through a network interface (135 in FIG. 2). Particularly, the image providing apparatus 100 may exchange data with the server 500 through a network 550. Specifically, the image providing apparatus 100 may transmit a broadcast trailer information request (IRE) to the server 500, and receive broadcast trailer information (BRI) from the server 500.

Meanwhile, the image providing apparatus 100 may display a broadcast image based on the received broadcast signal (BR), and display a thumbnail image related to the received BRI. If the thumbnail image is selected, the image providing apparatus 100 may display a broadcast trailer image corresponding to the thumbnail image. In response to a play input for the broadcast trailer image, the image providing apparatus 100 may play and display the broadcast trailer image.

Particularly, the image providing apparatus 100 may display broadcast program information based on input of an OK key of a remote controller 200. Upon selection of a trailer item in the broadcast program information, the image providing apparatus 100 may display a thumbnail image in the received BRI.

Meanwhile, the broadcast program information may include the name of a broadcast program, channel information, information about a broadcasting time, broadcasting type information, and so on.

Meanwhile, upon selection of the trailer item in the broadcast program information, the image providing apparatus 100 may display a thumbnail image included in a broadcast program information area. Upon selection of the thumbnail image, the image providing apparatus 100 may display a broadcast trailer image corresponding to the thumbnail image in an area other than the broadcast program information area. Preferably, the broadcast trailer image is larger than the thumbnail image.

Meanwhile, in response to a play input for the broadcast trailer image, the image providing apparatus 100 may play and display the broadcast trailer image. In this manner, it is possible to play and display an additional broadcast trailer image during display of a broadcast image, and thus the use convenience of the user may be increased.

Particularly, upon input of the OK key of the remote controller 200 with an advertisement image displayed after a broadcast program ends, the image providing apparatus 100 displays a trailer item along with information about the next broadcast program, so that the user may readily play and view a trailer image. After viewing the trailer image, the user may determine immediately whether to view the next program on the same channel or switch to another channel. Accordingly, the use convenience of the user may be increased.

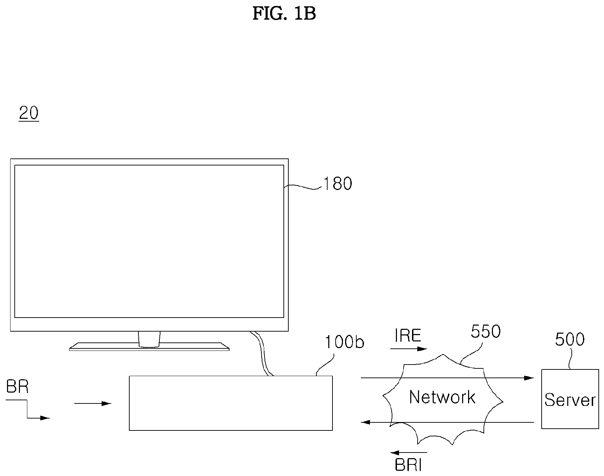

FIG. 1b illustrates an image display system according to another embodiment of the present disclosure.

Referring to FIG. 1b, the image display system may include an image providing apparatus 100b, a display 180, and the server 500.

The image providing apparatus 100b may receive a BR, process the received BR, and provide a broadcast image. The provided broadcast image may be displayed on a separately procured display 180.

That is, the image providing apparatus 100b may cover a set-top box other than a TV or a monitor, in concept.

Meanwhile, the image providing apparatus 100b may exchange data with the server 500 through a network interface (135 in FIG. 2). Particularly, the image providing apparatus 100b may exchange data with the server 500 through the network 550. Specifically, the image providing apparatus 100b may transmit an IRE to the server 500, and receive BRI from the server 500.

Meanwhile, the image providing apparatus 100 may provide a broadcast image based on the received BR, and provide a thumbnail image related to the received BRI. If the thumbnail image is selected, the image providing apparatus 100b may provide a broadcast trailer image corresponding to the thumbnail image. In response to a play input for the broadcast trailer image, the image providing apparatus 100b may play and provide the broadcast trailer image.

Particularly, the image providing apparatus 100b may display broadcast program information based on input of the OK key of the remote controller 200. Upon selection of a trailer item in the broadcast program information, the image providing apparatus 100b may provide a thumbnail image in the received BRI.

Meanwhile, the broadcast program information may include the name of a broadcast program, channel information, information about a broadcasting time, broadcasting type information, and so on.

Meanwhile, upon selection of the trailer item in the broadcast program information, the image providing apparatus 100b may provide a thumbnail image included in a broadcast program information area. Upon selection of the thumbnail image, the image providing apparatus 100b may provide a broadcast trailer image corresponding to the thumbnail image in an area other than the broadcast program information area. Preferably, the broadcast trailer image is larger than the thumbnail image.

Meanwhile, in response to a play input for the broadcast trailer image, the image providing apparatus 100b may play and provide the broadcast trailer image. In this manner, it is possible to play and provide an additional broadcast trailer image during display of a broadcast image, and thus the use convenience of the user may be increased.

Particularly with an advertisement image displayed after a broadcast program ends, upon input of the OK key of the remote controller 200, the image providing apparatus 100b provides a trailer item along with the next broadcast program information, so that the user may readily play and view a trailer image. After viewing the trailer image, the user may determine whether to view the next program on the same channel or switch to another channel. Accordingly, the use convenience of the user may be increased.

Now, a description will be given of the image providing apparatus 100 illustrated in FIG. 1a as an image providing apparatus of the present disclosure.

FIG. 2 is an exemplary internal block diagram of the image providing apparatus 100 illustrated in FIG. 1a.

Referring to FIG. 2, the image providing apparatus 100 according to an embodiment of the present disclosure may include a broadcasting receiver 105, an external device interface 130, a memory 140, a user input interface 150, a sensor unit (not shown), a controller 170, the display 180, and an audio output unit 185.

The broadcasting receiver 105 may include a tuner unit 110 and a demodulator 120. Unlike FIG. 2, the broadcasting receiver 105 may further include a network interface 130. As needed, the broadcasting receiver 105 may be designed so as to include only the network interface 135 without the tuner unit 110 and the demodulator 120.

Unlike FIG. 2, the broadcasting receiver 105 may further include the external device interface 135. For example, the broadcasting receiver 105 may receive a broadcast signal through the external device interface 135.

The tuner unit 110 selects a radio frequency (RF) broadcast signal corresponding to a channel selected by a user or an RF broadcast signal corresponding to each of pre-stored channels from among a plurality of RF broadcast signals received through an antenna. The tuner unit 110 also downconverts the selected RF broadcast signal into a digital intermediate frequency (IF) signal or an analog baseband audio or video signal.

For example, if the selected RF broadcast signal is a digital broadcast signal, the tuner unit 110 downconverts the selected RF broadcast signal into a digital IF signal, DIF. On the other hand, if the selected RF broadcast signal is an analog broadcast signal, the tuner unit 110 downconverts the selected RF broadcast signal into an analog baseband audio or video signal, CVBS/SIF. That is, the tuner unit 110 is capable of processing digital broadcast signals or analog broadcast signals. The analog baseband audio or video signal CVBS/SIF may be directly input to the controller 170.

In the present disclosure, the tuner unit 110 may sequentially select a number of RF broadcast signals corresponding to all broadcast channels previously stored by a channel add function from a plurality of RF signals received through the antenna and may downconvert the selected RF broadcast signals into IF signals or baseband audio or video signals.

The tuner unit 110 may include a plurality of tuners for receiving broadcast signals on a plurality of channels. Alternatively, the tuner unit 110 may be implemented into a single tuner for simultaneously receiving broadcast signals on a plurality of channels.

The demodulator 120 receives the digital IF signal DIF from the tuner unit 110 and demodulates the digital IF signal DIF.

The demodulator 120 may perform demodulation and channel decoding on the digital IF signal DIF, thereby outputting a stream signal TS. The stream signal TS may be a signal in which a video signal, an audio signal, or a data signal are multiplexed.

The stream signal TS output from the demodulator 120 may be input to the controller 170 and thus subjected to demultiplexing and audio/video signal processing. The processed video and audio signals are output to the display 180 and the audio output unit 185, respectively.

The external device interface 130 may transmit data to or receive data from a connected external device 190. For data transmission and reception, the external device interface 130 may include an audio/video (A/V) input/output (I/O) unit (not shown) or a wireless communication module (not shown).

The external device interface 130 may be connected to an external device such as a digital versatile disk (DVD) player, a Bluray player, a game console, a camera, a camcorder, a computer (e.g. a laptop computer), or a set-top box, wirelessly or by wire. Then, the external device interface 130 may transmit and receive signals to and from the external device.

The A/V I/O unit may receive video and audio signals from the external device. The wireless communication module may perform short-range wireless communication with other electronic devices.

The network interface 135 serves as an interface between the image providing apparatus 100 and a wired/wireless network such as the Internet. For example, the network interface 135 may receive content or data from the Internet or from a content provider (CP) or a network provider (NP) over a network.

The memory 140 may store programs necessary for the controller 170 to process and control signals, and may also store processed video, audio, or data signals.

The memory 140 may temporarily store a video, audio, or data signal received from the external device interface 130. The memory 140 may store information about predetermined broadcast channels by the channel add function such as a channel map.

While the memory 140 is shown in FIG. 2 as configured separately from the controller 170, to which the present disclosure is not limited, the memory 140 may be incorporated into the controller 170.

The user input interface 150 transmits a signal received from the user to the controller 170 or transmits a signal received from the controller 170 to the user.

For example, the user input interface 150 may transmit/receive user input signals such as a power on/off signal, a channel selection signal, and a screen setting signal from a remote controller 200, provide the controller 170 with user input signals received from local keys (not shown), such as inputs of a power key, a channel key, a volume key, and a setting key, transmit a user input signal received from the sensor unit (not shown) for sensing a user gesture to the controller 170, or transmit a signal received from the controller 170 to the sensor unit (not shown).

The controller 170 may demultiplex the stream signal received from the tuner unit 110, the demodulator 120, or the external device interface 130 into a number of signals and process the demultiplexed signals into a signal for audio or video output.

The video signal processed by the controller 170 may be displayed as an image on the display 180. The video signal processed by the controller 170 may also be transmitted to an external output device through the external device interface 130.

The audio signal processed by the controller 170 may be output to the audio output unit 185. Also, the audio signal processed by the controller 170 may be transmitted to the external output device through the external device interface 130.

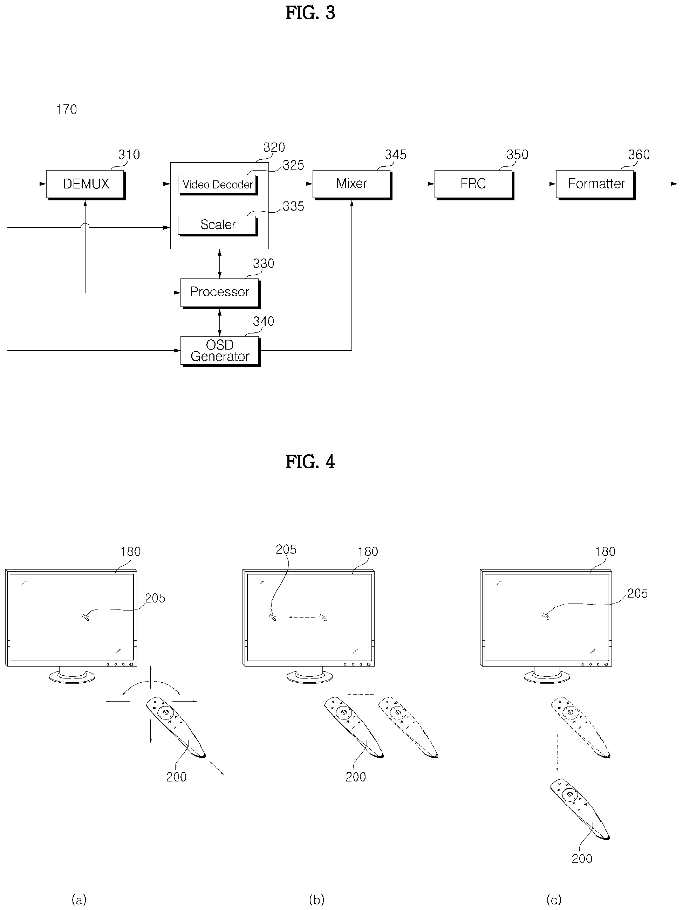

While not shown in FIG. 2, the controller 170 may include a demultiplexer (DEMUX) and a video processor, which will be described later with reference to FIG. 3.

In addition, the controller 170 may provide overall control to the image providing apparatus 100. For example, the controller 170 may control the tuner unit 110 to select an RF broadcast signal corresponding to a user-selected channel or a pre-stored channel.

The controller 170 may control the image providing apparatus 100 according to a user command received through the user input interface 150 or according to an internal program.

The controller 170 may also control the display 180 to display an image. The image displayed on the display 180 may be a still image or video, and a two-dimensional (2D) or three-dimensional (3D) image.

The controller 170 may control a particular 2D object in the image displayed on the display 180. For example, the particular object may be at least one of a linked Web page (e.g. from a newspaper, a magazine, etc.), an electronic program guide (EPG), various menus, a widget, an icon, a still image, a video, or text.

The controller 170 may locate the user based on an image captured by a camera unit (not shown). For example, the controller 170 may determine the distance (a z-axis coordinate) between the user and the image providing apparatus 100. In addition, the controller 170 may calculate x-axis and y-axis coordinates corresponding to the position of the user on the display 180.

The display 180 generates drive signals by converting a processed video signal, a processed data signal, an on screen display (OSD) signal, and a control signal received from the controller 170 or a video signal, a data signal, and a control signal received from the external device interface 130.

The display 180 may be various types of displays such as a plasma display panel (PDP), a liquid crystal display (LCD), an organic light-emitting diode (OLED) display, and a flexible display. The display 180 may also be capable of displaying 3D images. For 3D visualization, the display 180 may be configured into a glasses-free or glasses type.

The display 180 may also be a touch screen that may be used not only as an output device but also as an input device.

The audio output unit 185 may receive a processed audio signal from the controller 170 and output the received audio signal as voice.

The camera unit (not shown) captures a user. The camera unit (not shown) may include, but not limited to, a single camera. When needed, the camera unit may include a plurality of cameras. The camera unit may be embedded above the display 180 or may be separately configured. Image information captured by the camera unit (not shown) may be provided to the controller 170.

The controller 170 may sense a user's gesture from a captured image received from the camera unit (not shown) or from signals received from the sensor unit (not shown) alone or in combination.

The power supply 190 supplies power overall to the image providing apparatus 100. Particularly, the power supply 190 may supply power to the controller 170 implementable as a system on chip (SOC), the display 190 for displaying an image, and the audio output unit 185 for audio output.

Specifically, the power supply 190 may include an alternating current (AC)/direct current (DC) converter for converting AC power to DC power, and a DC/DC converter for changing the level of the DC power.

The remote controller 200 transmits a user input to the user input interface 150. For the transmission of a user input, the remote controller 200 may operate based on various communication standards such as Bluetooth, RF communication, infrared (IR) communication, ultra wideband (UWB), ZigBee, and so on. In addition, the remote controller 200 may receive a video signal, an audio signal, or a data signal from the user input interface 150 and may output the received signal as an image or sound.

The above-described image providing apparatus 100 may be a fixed or mobile digital broadcast receiver.

The block diagram of the image providing apparatus 100 illustrated in FIG. 2 is an exemplary embodiment of the present disclosure. The image providing apparatus 100 may include fewer components or more components than those shown in FIG. 2 according to the specification of the actually implemented image providing apparatus 100. Also, two or more components of the image providing apparatus 100 may be combined into a single component or a single component thereof may be separated into two more components. The functions of the components of the image providing apparatus 100 as set forth herein are illustrative in nature, not limiting the present disclosure.

The image providing apparatus 100 is an example of an image signal processing apparatus that processes an input or stored image. Meanwhile, the image providing apparatus 100b illustrated in FIG. 1b may be configured without the display 180 illustrated in FIG. 2. That is, the image providing apparatus 100b of FIG. 1b may be a set-top box, a DVD player, a Blueray player, a game console, a computer, or the like.

FIG. 3 is an internal block diagram of the controller illustrated in FIG. 2.

Referring to FIG. 3, the controller 170 according to an embodiment of the present disclosure may include a DEMUX 310, a video processor 320, a processor 330, an OSD generator 340, a mixer 345, a frame rate converter (FRC) 350, and a formatter 360. The controller 170 may further include an audio processor (not shown) and a data processor (not shown).

The DEMUX 310 demultiplexes an input stream. For example, in response to an MPEG-2 TS, the DEMUX 310 may demultiplex the MPEG-2 TS into a video signal, an audio signal, and a data signal. The input stream signal may be received from the tuner unit 110, the demodulator 120, or the external device interface 130.

The video processor 320 may process the demultiplexed video signal. For video signal processing, the video processor 320 may include a video decoder 325 and a scaler 335.

The video decoder 325 decodes the demultiplexed video signal and the scaler 335 scales the resolution of the decoded video signal so that the video signal may be displayed on the display 180.

The video decoder 325 may be provided with decoders that operate in conformance with various standards. For example, the video decoder 325 may include an MPEG-2 decoder, a H.264 decoder, a 3D video decoder for a color image and a depth image, and a decoder for multi-view images.

The processor 330 may provide overall control to the image providing apparatus 100 or the controller 170. For example, the processor 330 may control the tuner unit 110 to tune to an RF broadcasting corresponding to a user-selected channel or a pre-stored channel.

The processor 330 may also control the image providing apparatus 100 according to a user command received through the user input interface 150 or an internal program.

The processor 330 may control data transmission through the network interface 135 or the external device interface 130.

The processor 330 may control operations of the DEMUX 310, the video processor 320, and the OSD generator 340 in the controller 170.

The OSD generator 340 generates an OSD signal autonomously or according to a user input. For example, the OSD generator 340 may generate signals by which a variety of information is displayed as graphics or text on the display 180, according to user input signals. The OSD signal may include various data such as a user interface (UI) screen, a variety of menu screens, widgets, icons, and so on. Also, the OSD signal may include a 2D object or a 3D object.

Further, the OSD generator 340 may generate a pointer to be displayed on the display 180 based on a pointing signal received from the remote controller 200. Especially, the pointer may be generated from a pointing signal processor (not shown), which may reside in the OSD generator 340. Obviously, the pointing signal processor (not shown) may be configured separately from the OSD generator 240.

The mixer 345 may mix the decoded video signal processed by the video processor 320 with the OSD signal generated from the OSD generator 340. The mixed video signal is provided to the FRC 350.

The FRC 350 may change the frame rate of the input image or simply output the input image without frame rate conversion.

The formatter 360 may arrange left-eye and right-eye video frames of the frame rate-converted 3D image. The formatter 360 may also output a synchronization signal Vsync for opening the left and right lenses of a 3D viewing device (not shown).

The formatter 360 may change the input video signal into a video signal to be displayed on the display by converting the format of the input video signal.

Further, the formatter 360 may change the format of a 3D video signal. For example, the formatter 360 may change the format of the 3D video signal to one of various 3D formats such as a side by side format, a top/down format, a frame sequential format, an interlaced format, and a checker box format.

The formatter 360 may also change a 2D video signal to a 3D video signal. For example, the formatter 360 may detect an edge or a selectable object in the 2D video signal, and generate an object based on the detected edge or the selectable object as a 3D video signal. The 3D video signal may be separately arranged as a left-eye image signal L and a right-eye image signal R, as described above.

While not shown in FIG. 3, a 3D processor (not shown) for processing a 3D effect signal may further be provided after the formatter 360. This 3D processor (not shown) may process the brightness, tint, color, and so on of a video signal, for 3D effect improvement. For example, the 3D processor may perform a signal process so that a short distance may be clear and a long distance may be vague. Meanwhile, the function of the 3D processor may be incorporated in the format 360 or the video processor 320.

The audio processor (not shown) of the controller 170 may process the demultiplexed audio signal. For the audio signal processing, the audio processor (not shown) may have a plurality of decoders.

The audio processor (not shown) of the controller 170 may also adjust the bass, treble, and volume of the audio signal.

The data processor (not shown) of the controller 170 may process the data signal obtained by demultiplexing the input stream signal. For example, if the demultiplexed data signal is a coded data signal, the data processor may decode the coded data signal. The coded data signal may be an EPG which includes broadcasting information specifying the start time, end time, and so on of scheduled broadcast programs of each channel.

Meanwhile, the block diagram of the controller 170 illustrated in FIG. 3 is purely exemplary. Depending upon the specifications of the controller 170 in actual implementation, the components of the controller 170 may be combined or omitted or new components may be added.

Especially, the FRC 350 and the formatter 360 may be configured as individual modules or one module, separately outside the controller 170.

FIG. 4 illustrates a method for controlling the remote controller illustrated in FIG. 2.

FIG. 4(a) illustrates a pointer 205 corresponding to the remote controller 200, displayed on the display 180.

The user may move or rotate the remote controller 200 up and down, side to side (FIG. 4(b)), and back and forth (FIG. 4(c)). The pointer 205 displayed on the display 180 of the image display apparatus represents movement of the remote controller 200. Since the pointer 205 moves in accordance with the movement of the remote controller 200 in a 3D space, the remote controller 200 may be referred to as a spatial remote controller or a 3D pointing device.

Referring to FIG. 4(b), if the user moves the remote controller 200 to the left, the pointer 205 also moves to the left on the display 180 of the image display apparatus.

A sensor of the remote controller 200 detects the movement of the remote controller 200 and transmits motion information corresponding to the result of the detection to the image display apparatus. Then, the image display apparatus may calculate the coordinates of a target point to which the pointer 205 should be shifted based on the motion information. The image display apparatus may then display the pointer 205 at the calculated coordinates.

Referring to FIG. 4(c), while pressing a predetermined button of the remote controller 200, the user moves the remote controller 200 away from the display 180. Then, a selected area corresponding to the pointer 205 may be zoomed in and enlarged on the display 180. On the contrary, if the user moves the remote controller 200 toward the display 180, the selection area corresponding to the pointer 205 may be zoomed out and thus contracted on the display 180. Meanwhile, when the remote controller 200 moves away from the display 180, the selection area may be zoomed out and when the remote controller 200 approaches the display 180, the selection area may be zoomed in.

With the predetermined button pressed in the remote controller 200, the up, down, left and right movements of the remote controller 200 may be ignored. That is, when the remote controller 200 moves away from or approaches the display 180, only the back and forth movements of the remote controller 200 may be sensed, while the up, down, left and right movements of the remote controller 200 may be ignored. Unless the predetermined button is pressed in the remote controller 200, the pointer 205 moves in accordance with the up, down, left or right movement of the remote controller 200.

The speed or direction of the pointer 205 may correspond to the speed or direction of the remote controller 200.

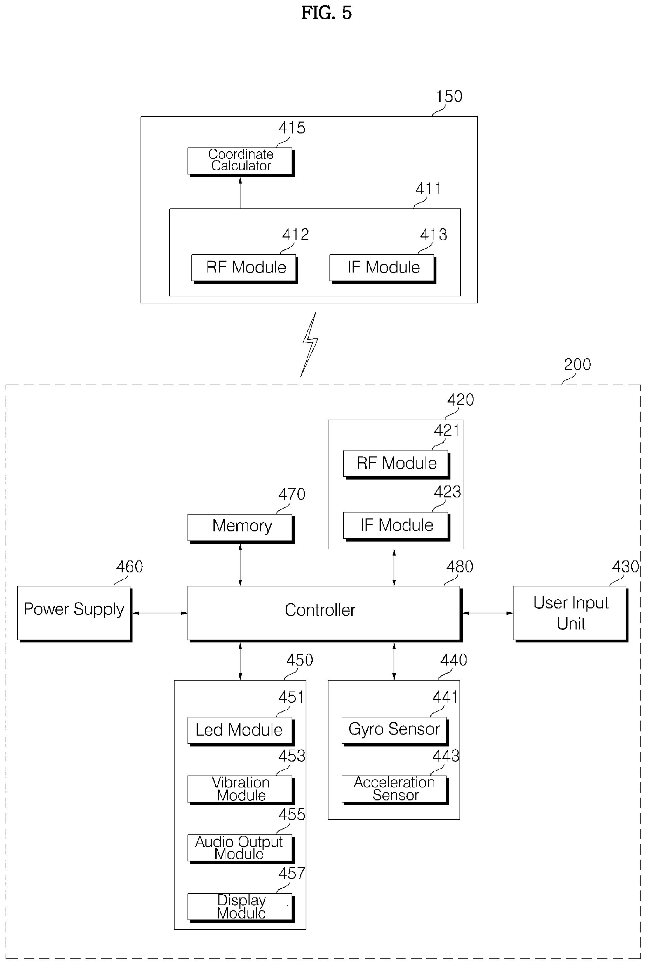

FIG. 5 is a block diagram of the remote controller illustrated in FIG. 2.

Referring to FIG. 5, the remote controller 200 may include a wireless communication unit 425, a user input unit 435, a sensor unit 440, an output unit 450, a power supply 460, a memory 470, and a controller 480.

The wireless communication unit 425 transmits signals to and receives signals from one of the aforedescribed image display apparatuses according to embodiments of the present disclosure. One of the image display apparatuses according to the embodiments of the present invention, that is, the image providing apparatus 100 will be taken as an example.

In the embodiment of the present disclosure, the remote controller 200 may include an RF module 421 for transmitting RF signals to and receiving RF signals from the image providing apparatus 100 according to an RF communication standard. The remote controller 200 may also include an IR module 423 for transmitting IR signals to and receiving IR signals from the image providing apparatus 100 according to an IR communication standard.

The remote controller 200 transmits motion information regarding the movement of the remote controller 200 to the image providing apparatus 100 through the RF module 421 in the embodiment of the present disclosure.

The remote controller 200 may also receive signals from the image providing apparatus 100 through the RF module 421. The remote controller 200 may transmit commands, such as a power on/off command, a channel switching command, or a sound volume change command, to the image providing apparatus 100 through the IR module 423, as needed.

The user input unit 435 may include a keypad, buttons, a touch pad, or a touch screen. The user may enter commands related to the image providing apparatus 100 to the remote controller 200 by manipulating the user input unit 435. If the user input unit 435 includes a plurality of hard-key buttons, the user may input various commands related to the image providing apparatus 100 to the remote controller 200 by pressing the hard-key buttons. If the user input unit 435 includes a touch screen displaying a plurality of soft keys, the user may input various commands related to the image providing apparatus 100 to the remote controller 200 by touching the soft keys. The user input unit 435 may also include various input tools other than those set forth herein, such as a scroll key or a jog key, which should not be construed as limiting the present disclosure.

The sensor unit 440 may include a gyro sensor 441 or an acceleration sensor 443. The gyro sensor 441 may sense motion information about the remote controller 200.

For example, the gyro sensor 441 may sense motion information about the remote controller 200 in x-, y-, and z-axis directions. The acceleration sensor 443 may sense the moving speed of the remote controller 200. The sensor unit 440 may further include a distance sensor for sensing the distance between the remote controller 200 and the display 180.

The output unit 450 may output a video or audio signal corresponding to a manipulation of the user input unit 435 or a signal transmitted by the image providing apparatus 100. The user may easily identify whether the user input unit 435 has been manipulated or whether the image providing apparatus 100 has been controlled based on the video or audio signal output from the output unit 450.

For example, the output unit 450 may include a light emitting diode (LED) module 451 which is turned on or whenever the user input unit 435 is manipulated or whenever a signal is received from or transmitted to the image providing apparatus 100 through the wireless communication unit 425, a vibration module 453 which generates vibrations, an audio output module 455 which outputs audio data, or a display module 457 which outputs an image.

The power supply 460 supplies power to the remote controller 200. If the remote controller 200 is kept stationary for a predetermined time or longer, the power supply 460 may, for example, reduce or cut off supply of power to the remote controller 200 in order to save power. The power supply 460 may resume supply of power if a specific key on the remote controller 200 is manipulated.

The memory 470 may store various programs and application data for controlling or operating the remote controller 200. The remote controller 200 may wirelessly transmit signals to and receive signals from the image providing apparatus 100 in a predetermined frequency band through the RF module 421. The controller 480 of the remote controller 400 may store information regarding the frequency band used for the remote controller 200 to wirelessly transmit signals to and wirelessly receive signals from the paired image providing apparatus 100 in the memory 270 and may then refer to this information for use at a later time.

The controller 480 provides overall control to the remote controller 200. For example, the controller 480 may transmit a signal corresponding to a key manipulation detected from the user input unit 435 or a signal corresponding to motion of the remote controller 200, as sensed by the sensor unit 440, to the image providing apparatus 100 through the wireless communication unit 425.

The user input interface 150 of the image display providing 100 may include a wireless communication unit 151 which wirelessly transmits signals to and wirelessly receives signals from the remote controller 200, and a coordinate calculator 415 which calculates coordinates representing the position of the pointer 200 corresponding to the movement of the remote controller 200.

The user input interface 150 may wirelessly transmit RF signals to and wirelessly receive RF signals from the remote controller 200 through the RF module 412. In addition, the user input interface 150 may wirelessly receive IR signals from the remote controller 200 through the IR module 413 according to the IR communication standard.

The coordinate calculator 415 may receive motion information regarding the movement of the remote controller 200 through the wireless communication unit 151 and may calculate coordinates (x, y) representing the position of the pointer on a screen of the display 180 by correcting the motion information for user hand tremor or possible errors.

A signal received in the image providing apparatus 100 from the remote controller 200 through the user input interface 150 may be transmitted to the controller 180. Then, the controller 180 may acquire information regarding the movement of the remote controller 200 and information regarding a key manipulation detected from the remote controller 200 from the signal received from the user input interface 150, and may control the image providing apparatus 100 based on the acquired information.

In another example, the remote controller 200 may calculate the coordinates of a position to which the pointer is to be shifted in correspondence with its movement and output the coordinates to the user input interface 150 of the image providing apparatus 100. In this case, the user input interface 150 of the image providing apparatus 100 may transmit information about the pointer coordinates which was not corrected for user hand tremor or possible errors to the controller 180.

In a further example, unlike the configuration of the remote controller 200 illustrated in FIG. 5, the coordinate calculator 415 may reside in the controller 170, instead of the user input interface 150.

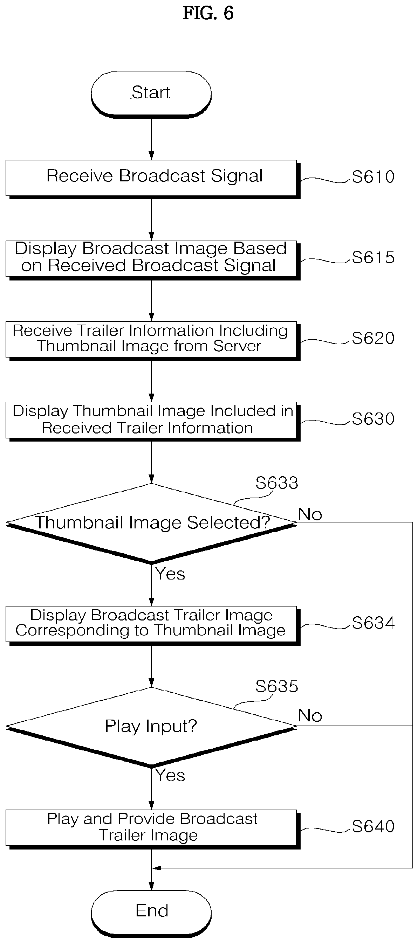

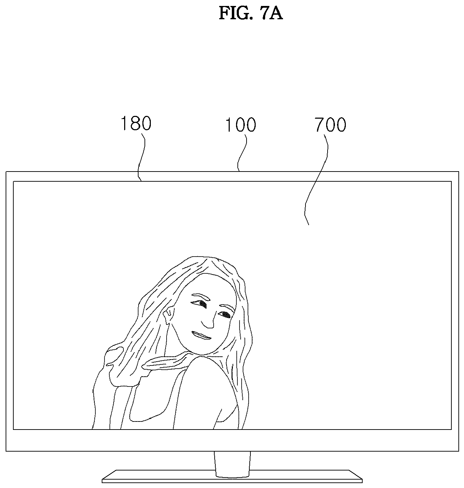

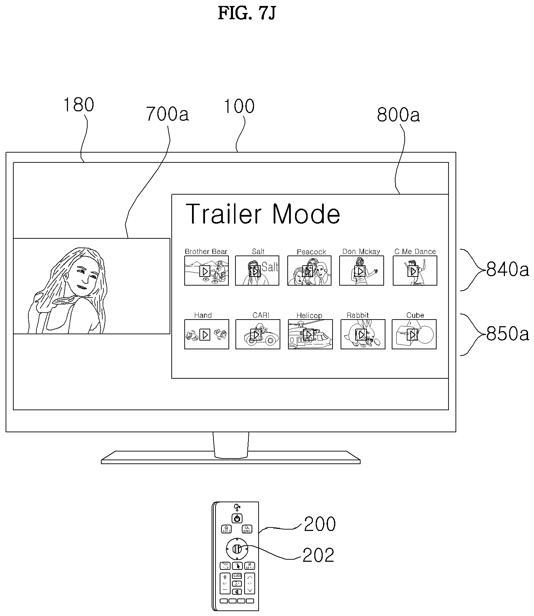

FIG. 6 is a flowchart illustrating an exemplary method for operating an image providing apparatus according to an embodiment of the present disclosure, and FIGS. 7a to 16e are views referred to for describing the operation method illustrated in FIG. 6.

Referring to FIG. 6, the image providing apparatus 100 receives a BR (S610). The received BR may be an over-the-air broadcast signal or cable broadcast signal received through the broadcasting receiver 105.

The BR may include a broadcast video signal, a broadcast audio signal, and a broadcast data signal.

Then, the image providing apparatus 100 provides a broadcast image based on the received BR (S615). The controller 170 performs video signal processing based on the received BR and outputs a broadcast image. The broadcast image may be input to and displayed on the display 180.

The broadcast image may be an image of a broadcast program provided by a broadcasting station, or an advertisement image provided by the broadcasting station after a broadcast program ends.

The image providing apparatus 100 receives broadcast trailer information (BRI) including a thumbnail image from the server 500 (S620).

For example, if the user manipulates the OK key of the remote controller 200, the image providing apparatus 100 may receive an OK key input of the remote controller 200 through the user input interface 150.

Therefore, the controller 170 may output the broadcast program information as an OSD image based on the OK key input of the remote controller 200. The display 180 may display a broadcast program information image including the broadcast program information.

Meanwhile, the broadcast program information may include information about the name of a broadcast program, channel information, information about a broadcasting time, broadcasting type information, and so on.

If BRI is included in the broadcast program information, the broadcast program information may further include a trailer item in addition to the channel information, the broadcasting time information, and the broadcasting type information.

The broadcasting receiver 105 may receive a BR from a broadcasting station, and the controller 170 may extract a broadcast data signal from the received BR and extract broadcast program information from the broadcast data signal.

Particularly, the controller 170 may extract information about the name of a broadcast program, channel information, information about a broadcasting time, and broadcasting type information from the broadcast program information, based on the BR received from the broadcasting receiver 105.

BRI in the broadcast program information may be received from the server 500 managed by or related to a broadcasting station through the network interface 135.

The BRI may include a thumbnail image related to a broadcast trailer.

The controller 170 may generate an OSD image representing a trailer item based on the received BRI and dispose the OSD image in an image of the broadcast program information. Therefore, the display 180 may display the broadcast program information image including the information about the name of the broadcast program, the channel information, the broadcasting time information, the broadcasting type information, and the trailer item.

Meanwhile, if the user selects the trailer item by means of the remote controller 200, the image providing apparatus 100 provides a thumbnail image related to the received BRI (S630).

If the trailer item is selected from the broadcast program information image, the controller 170 provides the thumbnail image related to the received BRI.

If the user selects the thumbnail image by means of the remote controller (S633), the image providing apparatus 100 provides a broadcast trailer image corresponding to the selected thumbnail image (S634).

For example, upon selection of the thumbnail image, the controller 170 may zoom in the thumbnail image and control providing of the zoomed-in thumbnail image as a broadcast trailer image. Along with the broadcast trailer image, the controller 170 may control providing of a menu for playing the broadcast trailer image.

In another example, upon selection of the thumbnail image, the controller 170 may read a broadcast trailer image received along with the thumbnail image of the BRI from the memory 140, and provide the broadcast trailer image. The broadcast trailer image may be a paused broadcast trailer image.

In another example, upon selection of the thumbnail image, the controller 170 may control the network interface 135 to access the server 500, using Web address information such as a uniform resource locator (URL) received along with the thumbnail image of the BRI. The controller 170 controls the network interface 135 to transmit a broadcast trailer image transmission request to the server 500. The controller 170 may receive a broadcast trailer image corresponding to the broadcast trailer image transmission request from the server 500 through the network interface 135. The received broadcast trailer image may be a paused broadcast trailer image.

In response to a play input for the broadcast trailer image (S635), the image providing apparatus 100 plays and provides the broadcast trailer image (S640).

For example, in response to the play input for the displayed broadcast trailer image, the controller 170 may read a broadcast trailer video received along with the thumbnail image of the BRI from the memory 140, and play and provide the broadcast trailer video.

In another example, in response to the play input for the displayed broadcast trailer image, the controller 170 may access the server 500 using Web address information, receive a broadcast trailer video in streaming from the server 500, and play and provide the broadcast trailer video.

Since a trailer item is provided along with broadcast program information, the user may simply play and view a broadcast trailer image. Further, the user may determine directly whether to view the next program of the same channel or switch to another channel after viewing the broadcast trailer image. As a consequence, the use convenience of the user may be increased.

A description will be given below of various operation methods with reference to FIGS. 7a to 16e.

FIG. 7a is an exemplary view illustrating display of an advertisement image 700 on the display 180 of the image providing apparatus 100, after a broadcast program ends.

The user may be interested in an image of the next broadcast program during viewing the advertisement image. Then, the user may manipulate an OK key 202 of the remote controller 200.

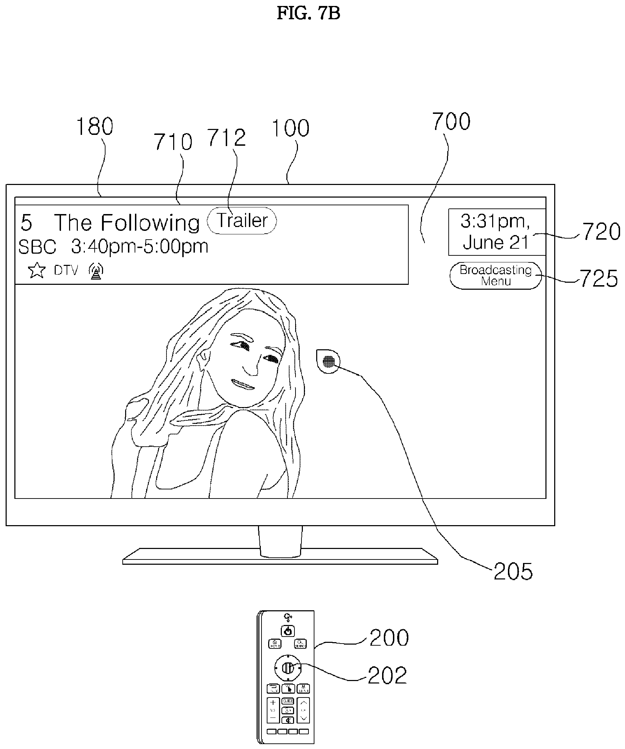

When the OK key 202 of the remote controller 200 is manipulated, the controller 170 may display a broadcasting information image 710 including broadcasting information, determining that a broadcasting information display input corresponding to the OK key 202 of the remote controller 200 has been received through the user input interface 150, as illustrated in FIG. 7b.

FIG. 7b is an exemplary view illustrating display of the broadcasting information image 710 overlapped over the advertisement image 700 according to manipulation of the OK key 202 of the remote controller 200.

The broadcasting information image 710 may include the name of a broadcast program following the advertisement image, broadcast channel information, broadcast program time information, broadcasting type information (DTV), and a trailer item 712.

As described before, the name of the broadcast program, the broadcast channel information, the broadcast program time information, and the broadcasting type information (DTV) may be received through the tuner unit 110 of the broadcasting receiver 105, and BRI related to the trailer item 712 may be received from the server 500 through the network interface 135.

Meanwhile, time information 720 and broadcasting menu information 725 may further be displayed in addition to the broadcasting information image 710 according to manipulation of the OK key 202 of the remote controller 200.

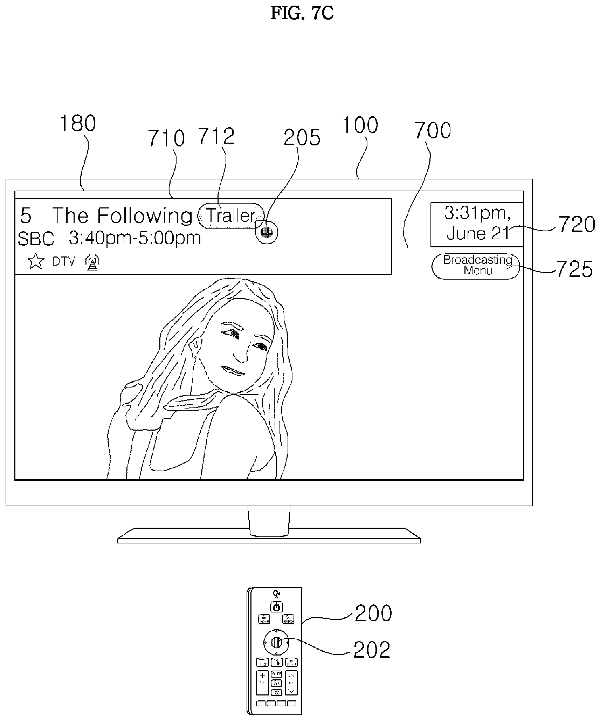

FIG. 7c is an exemplary view of selection of the trailer item 712 in the broadcasting information image 710 by means of the pointer 205 of the remote controller 200.

For example, if the OK key 202 of the remote controller 200 is manipulated in a state where the pointer 205 of the remote controller 200 is shifted to and positioned over the trailer item 712, the trailer item 712 may be selected.

Upon selection of the trailer item 712, the controller 170 may change at least one of the size and color of the trailer item 712. As the trailer item 712 is selected, the controller 170 may control display of a thumbnail image related to the BRI.

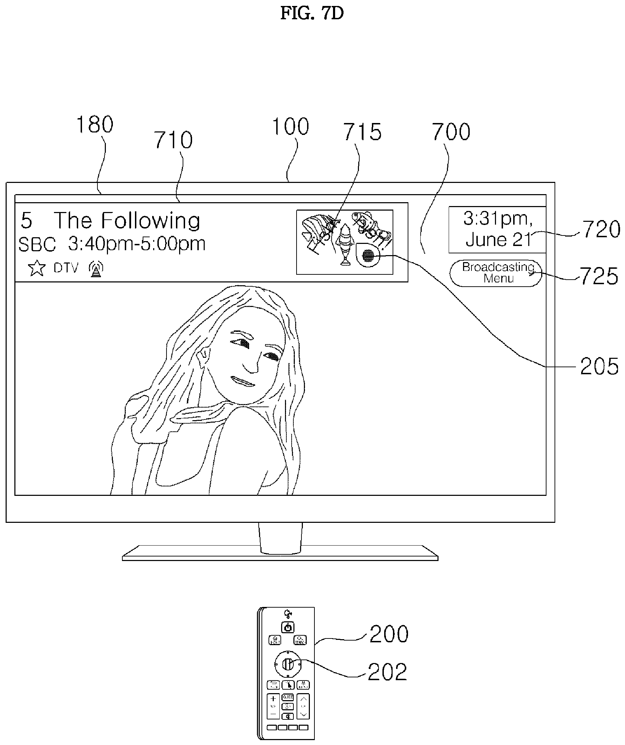

FIG. 7d is an exemplary view illustrating display of a thumbnail image 715 related to the next broadcast program in the broadcasting information image 710, when the trailer item 712 is selected. The thumbnail image 715 may be received along with the BRI.

The user may briefly know what the next broadcast program is about from the thumbnail image 715.

Unlike FIG. 7d, the moment the thumbnail image 715 is displayed, a broadcast trailer video may be played automatically.

More specifically, if the user needs to find out the contents of the next broadcast program, the user may select the thumbnail image 715 by means of the pointer 205 of the remote controller 200.

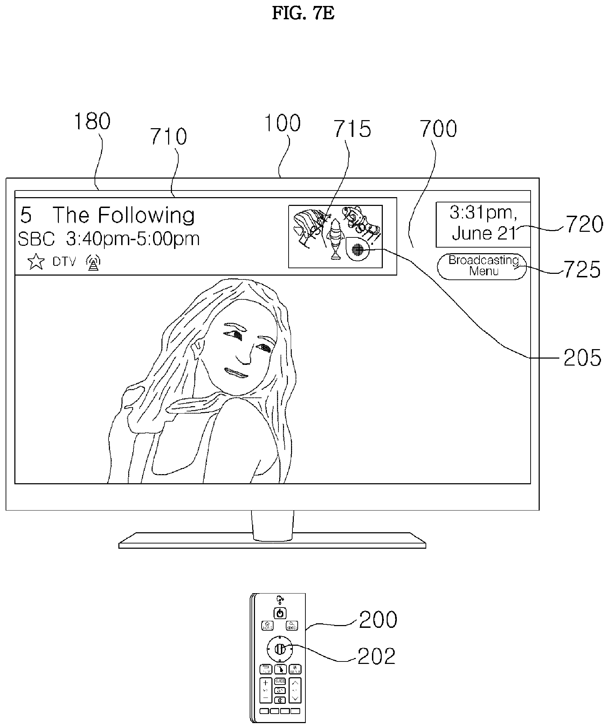

FIG. 7e is an exemplary view illustrating the user's selection of the thumbnail image 715 by means of the pointer 205 of the remote controller 200.

Upon selection of the thumbnail image 715, the controller 170 may control display of a broadcast trailer image corresponding to the thumbnail image 715 separately from the broadcasting information image 710.

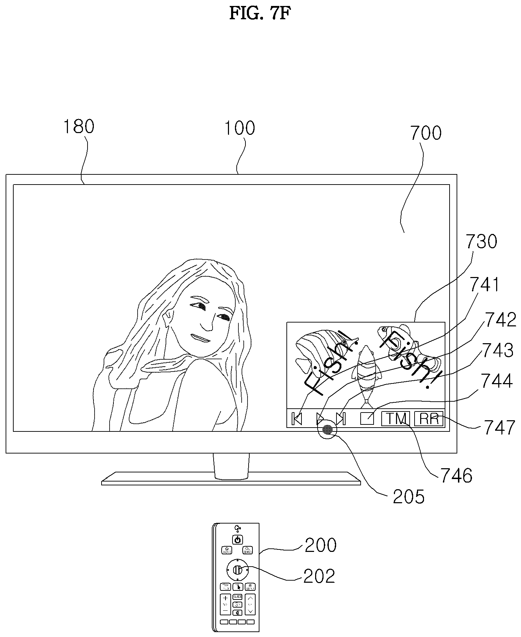

FIG. 7f is an exemplary view illustrating display of a broadcast trailer image 730 corresponding to the thumbnail image 715, overlapped over a lower part of the advertisement image 700. While the broadcasting information image 710 is shown as not displayed along with the broadcast trailer image 730, by way of example, the broadcasting information image 710 may be displayed along with the broadcast trailer image 730.

For more detailed information, the size of the broadcast trailer image 730 is preferably larger than the size of the thumbnail image 715.

Upon selection of the thumbnail image 715, it is possible to play the broadcast trailer image 730 immediately. However, the broadcast trailer image 730 is shown in FIG. 7f as displayed in a paused state, by way of example.

To play the broadcast trailer image 730, the controller 170 may control display of an additional play menu 740. In FIG. 7f, the play menu 740 includes, for example, a reverse item 741, a play item 742, a forward item 743, a pause item 744, a trailer mode (TM) item 746, and a reserved recording (RR) item 747.

The reverse item 741 represents a function of searching for a previous broadcast trailer image, the play item 742 may represent a function of playing a paused broadcast trailer image, the forward item 743 may represent a function of searching for a next broadcast trailer image, the pause item 744 may represent a pause function or exit function for a played broadcast trailer image, the TM item 746 may represent a function of viewing a plurality of broadcast trailer thumbnail images or a plurality of broadcast trailer images, and the RR item 747 may represent a reserved recording function for a broadcast program related to a broadcast trailer image.

If the play item 742 is selected by the pointer 205 of the remote controller 200, the controller 170 may play the paused broadcast trailer image 730 and display the played image.

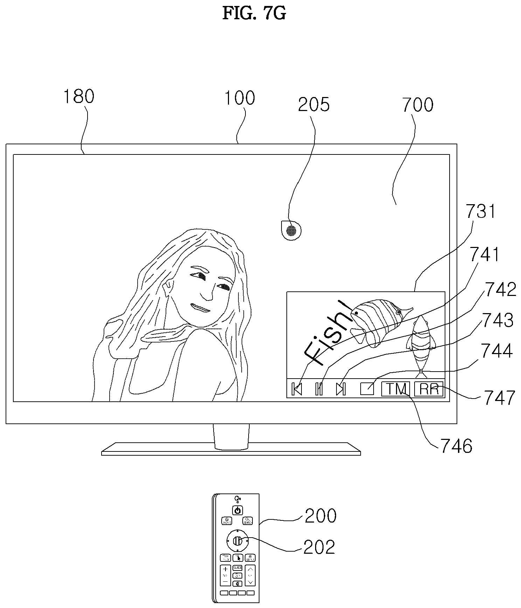

FIG. 7g is an exemplary view illustrating display of a played broadcast trailer image 731 in a lower part of a screen, along with the broadcast image 700. The play item 742 illustrated in FIG. 7f may be changed to and displayed as the pause item.

Meanwhile, the controller 170 may change a sound output from the image providing apparatus 100 according to the position of the pointer 205 during play of the broadcast trailer image 731.

For example, if the pointer 250 is positioned inside the played broadcast trailer image 731, the controller 170 may output a sound corresponding to the played broadcast trailer image 731 to the audio output unit 185. On the other hand, if the pointer 250 is positioned in the broadcast image 700 outside the played broadcast trailer image 731, the controller 170 may output a sound corresponding to the broadcast image 700 to the audio output unit 185. Therefore, the user may listen to a sound for an image in which the user is interested.

If the broadcast trailer image 731 is completely played or the pause item 744 is selected in the play menu 740, the played broadcast trailer image 731 or the broadcast trailer image 730 may disappear.

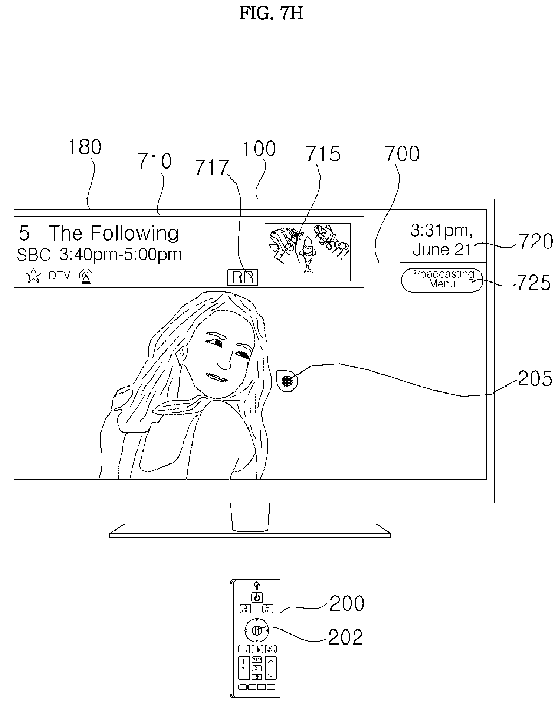

That is, the broadcast image 700 and the broadcasting information image 710 may be displayed together again, as illustrated in FIG. 7h. While the thumbnail image 715 related to the next broadcast program is shown as displayed in the broadcasting information image 710, it is possible to display only broadcasting information as illustrated in FIG. 7b.

Meanwhile, if the broadcast trailer image 31 is completely played or the pause item 744 is selected in the play menu 740, the RR item 717 may further be provided in the broadcasting information image 71.

If a trailer image is not viewed, the controller 170 may control the RR item 717 not to appear, as illustrated in FIGS. 7d and 7e. After the trailer image is viewed, the controller 170 may control additional providing of the RR item 717. Thus, the user may simply perform RR after viewing the trailer image.

Needless to say, unlike the drawings, the RR item 717 may be displayed irrespective of viewing of the trailer image in FIGS. 7d and 7e.

If the thumbnail image 715 is selected in FIG. 7e, the broadcast trailer image 730 corresponding to the thumbnail image 715 is displayed as a picture in picture (PIP) image in the advertisement image 710 in FIG. 7f, by way of example. However, it is also possible to display the trailer broadcast image 730 as a picture by picture (PBP) image. That is, the screen may be divided into a plurality of screens.

The controller 170 may control display of a thumbnail image 730a in a separate screen from the advertisement image 710 by screen division.

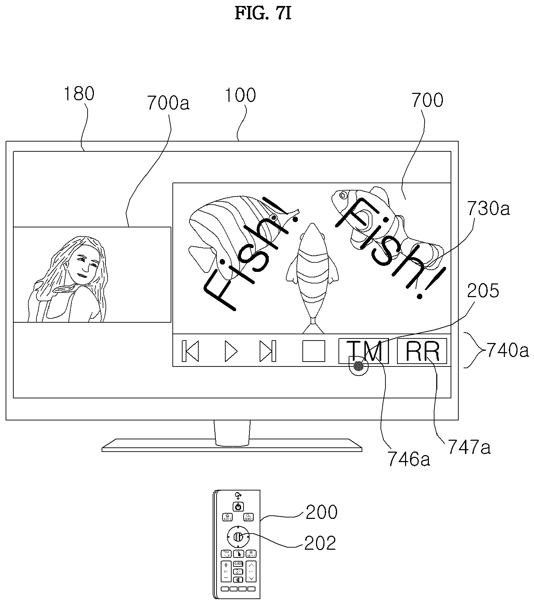

FIG. 7i is an exemplary view illustrating scale-down of the displayed advertisement image and display of a scaled-down advertisement image 700a on the left side and the broadcast trailer image 730a corresponding to the selected thumbnail image 715 on the right side. Herein, the size of the broadcast trailer image 730a may be larger than the size of the scaled-down advertisement image 700a.

At the moment, a play menu 740a may also be displayed, for playing the broadcast trailer image 730a. As described before, the play menu 740a may include a reverse item, a play item, a forward item, a pause item, a TM item 746a, and an RR item 747a.

Upon selection of the TM item 746a in FIG. 7i, the scaled-down advertisement image 700a and a thumbnail list 800a corresponding to the TM may be displayed in the divided screens.

That is, the thumbnail list 800a corresponding to the TM item 746a may be displayed. In this context, the thumbnail list 800a may be referred to as a trailer list.

The thumbnail list 800a may include a first thumbnail image list 840a with a plurality of thumbnail images and a second thumbnail image list 850a with a plurality of thumbnail images, which are related to trailers of broadcast programs.

If a thumbnail image 841a is selected or focused in the thumbnail list 800a by means of the pointer 205 of the remote controller, the controller 170 may display a broadcast trailer image corresponding to the selected or focused thumbnail image on the display 180.

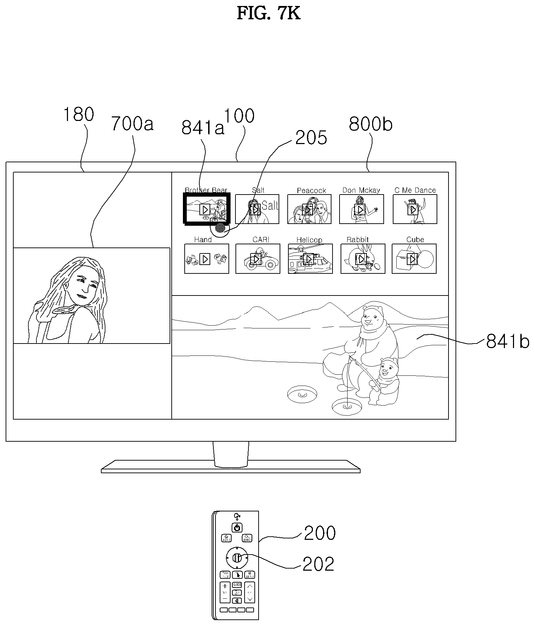

Particularly, the controller 170 may control display of a broadcast trailer image 841b along with the scaled-down advertisement image 700a and a thumbnail list 800b corresponding to the TM on separate screens, as illustrated in FIG. 7k. Therefore, the user may simply view an intended broadcast trailer image.

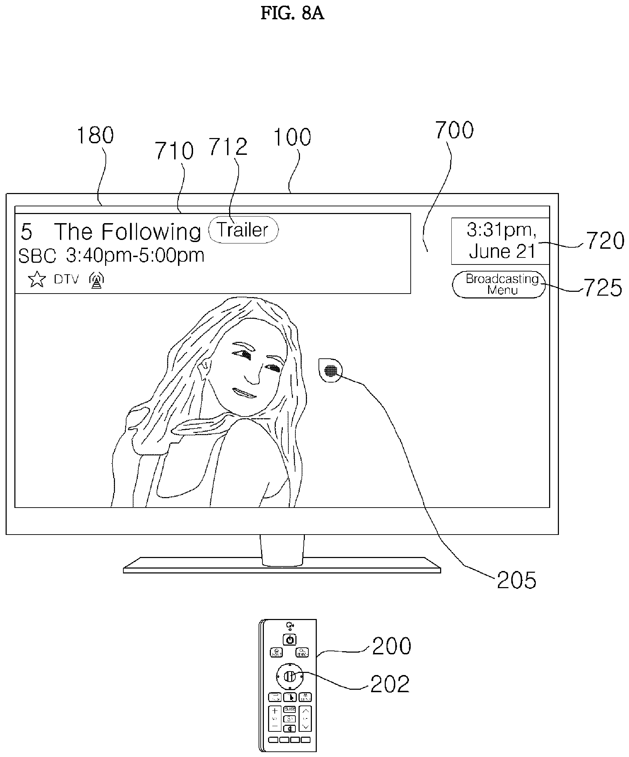

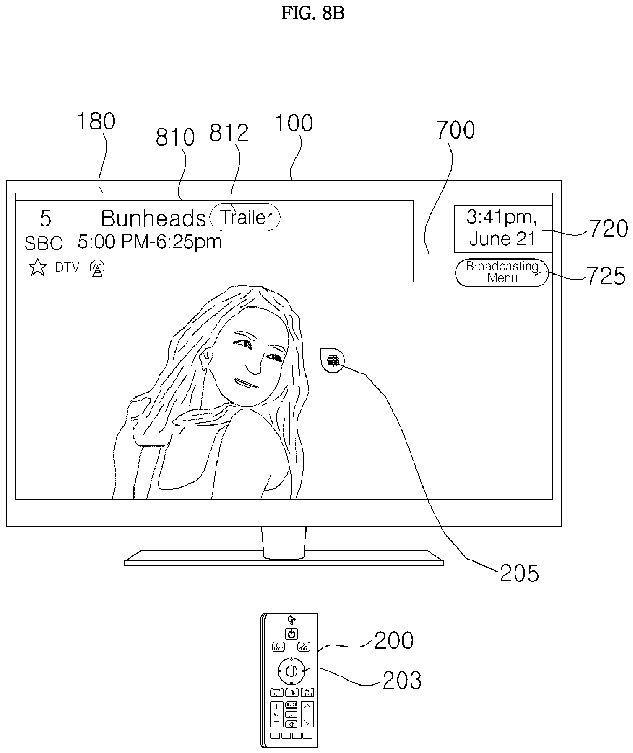

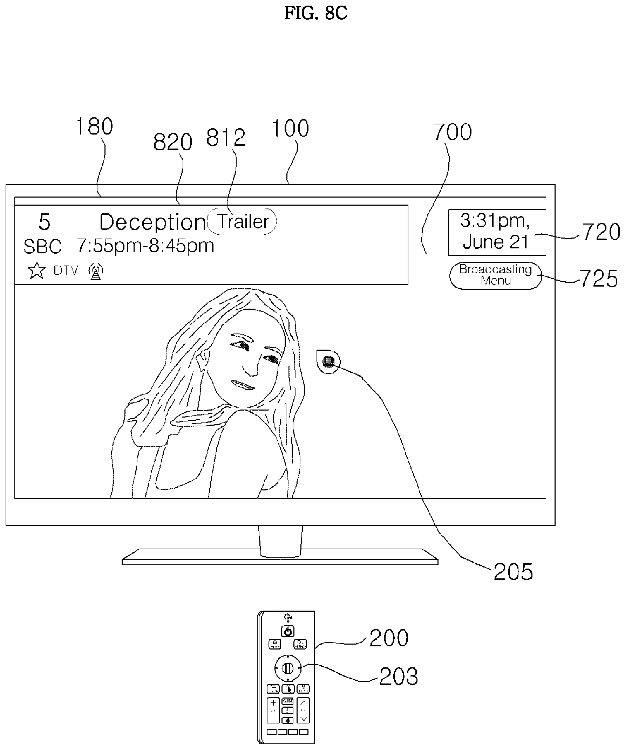

In response to a view input for a trailer of another broadcast program of the same channel, the controller 170 may provide information about the other broadcast program and a thumbnail image corresponding to the information about the other broadcast program, which will be described with reference to FIGS. 8a, 8b, and 8c.

FIG. 8a is an exemplary view illustrating display of the broadcasting information image 710 including broadcasting information, upon input of the OK key 202 for viewing broadcasting information from the remote controller 200 during display of the advertisement image 700.

The broadcasting information image 710 may include the name of the next broadcast program (`The Following') after the advertisement image 700, time information ('3:40-5:00'), image quality type information ('DTV'), channel information (SBC), and the trailer item 712.

Upon input of a right key 203 for viewing information about the next broadcast program, from the remote controller 200, a broadcasting information image 810 including the next broadcasting information may be displayed, as illustrated in FIG. 8b.

The broadcasting information image 810 may include the name of the next broadcast program (`Bunheads') after the broadcast program 'The Following', time information ('5:00-6:25'), image quality type information ('DTV'), channel information (SBC), and a trailer item 812.

Upon additional input of the right key 203 for viewing information about the next broadcast program, from the remote controller 200, a broadcasting information image 820 including the next broadcasting information may be displayed, as illustrated in FIG. 8c.

The broadcasting information image 820 may include the name of the next broadcast program ('Deception') after the broadcast program 'Bunheads', time information ('7:55-8:45'), image quality type information ('DTV'), channel information (SBC), and the trailer item 812.

The controller 170 may control display of broadcasting program information for which there is a trailer image. That is, a comparison between FIG. 8b and FIG. 8c reveals that broadcasting information about a broadcast program scheduled to be broadcast at 6:25 to 7:55 is not displayed. That is, in the case where there is no trailer image for a broadcast program, when a view input for broadcasting information about the next broadcast program is received, information about the broadcast program may not be displayed.

In contrast, the controller 170 may display broadcast program information of all time zones. In the absence of a trailer image for a broadcast program, the controller 170 may control a trailer item not to be displayed.

Upon selection of the trailer item 712 or 812 in FIGS. 8a, 8b, and 8c, a trailer thumbnail image for the corresponding broadcast program may be displayed. Upon selection of the thumbnail image, a trailer image may be displayed.

As illustrated in FIGS. 8a, 8b, and 8c, in response to a view input for a trailer of another broadcast program of the same channel, the trailer of the broadcast program may be displayed.

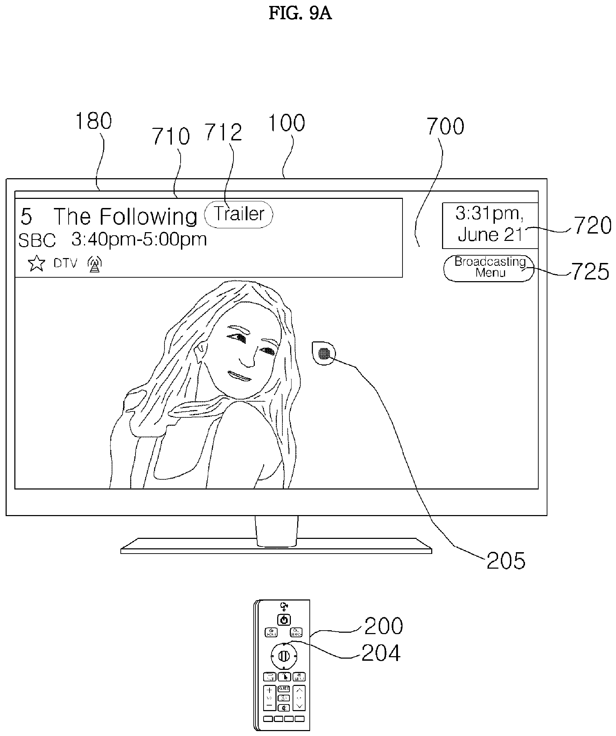

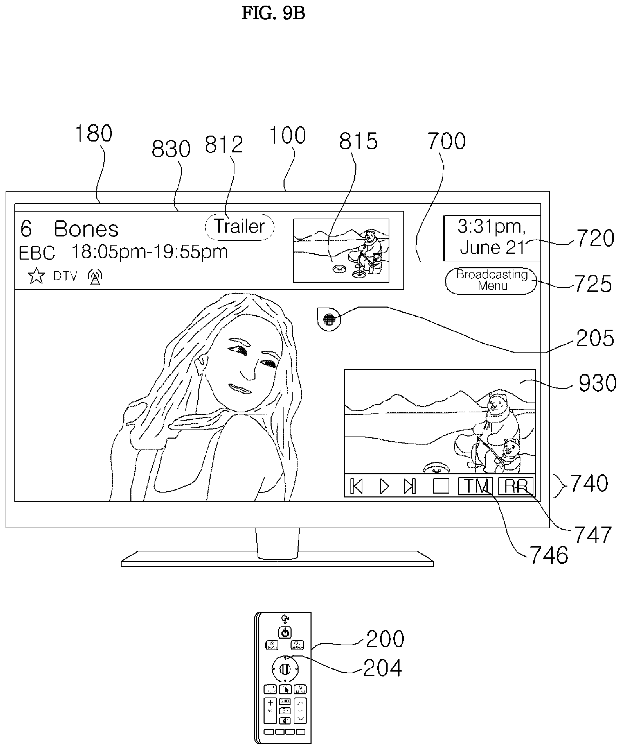

On the other hand, in response to a view input for a trailer of a broadcast program on a different channel, the controller 170 may provide information about the broadcast program of the different channel, and a thumbnail image corresponding to the broadcast program information of the different channel, which will be described with reference to FIGS. 9a and 9b.

FIG. 9a is an exemplary view illustrating display of the broadcasting information image 710 including broadcasting information, upon input of the OK key 202 for viewing broadcasting information from the remote controller 200, like FIG. 8a. For a detailed description of FIG. 9a, FIG. 8a may be referred to.

Upon input of an up key 204 for viewing information about a broadcast program on the next channel from the remote controller 200, a broadcasting information image 830 including broadcasting information about the next channel may be displayed, as illustrated in FIG. 9b.

The broadcasting information image 830 illustrated in FIG. 9b may include a program name ('Bones'), time information (`18:05-19:55'), image quality type information (DTV), channel information (EBC), and the trailer item 812, for a broadcast program on channel 6 next to channel 5.

Upon selection of the trailer item 812, a thumbnail image 815 related to 'Bones' may be displayed. Upon selection of the thumbnail image 815, the menu 740 for playing a trailer image may be displayed along with a trailer image 930 of `Bones'.

While the trailer item 812, the thumbnail image 815, and the trailer image 930 are shown as displayed simultaneously in FIG. 9a by way of example, the trailer item 812, the thumbnail image 815, and the trailer image 930 may be sequentially displayed, as described before.

As illustrated in FIGS. 9a and 9b, in response to an input for viewing a trailer of a broadcast program on a different channel, the trailer of the broadcast program on the different channel may readily be viewed. Accordingly, since only a trailer of another channel can be readily viewed without channel switching, the use convenience of the user may be increased.

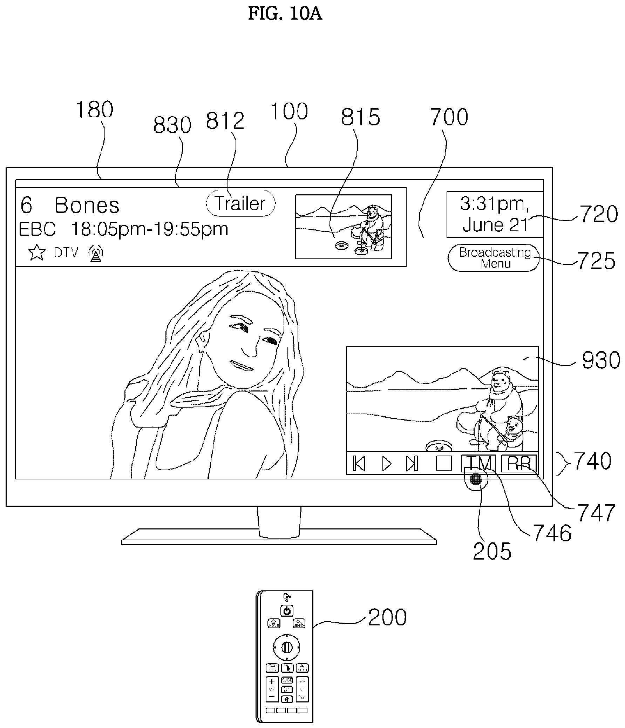

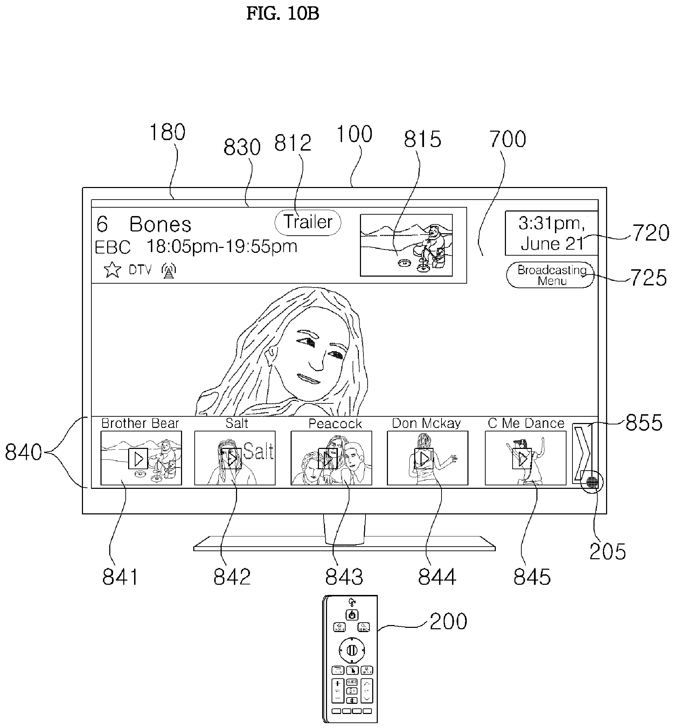

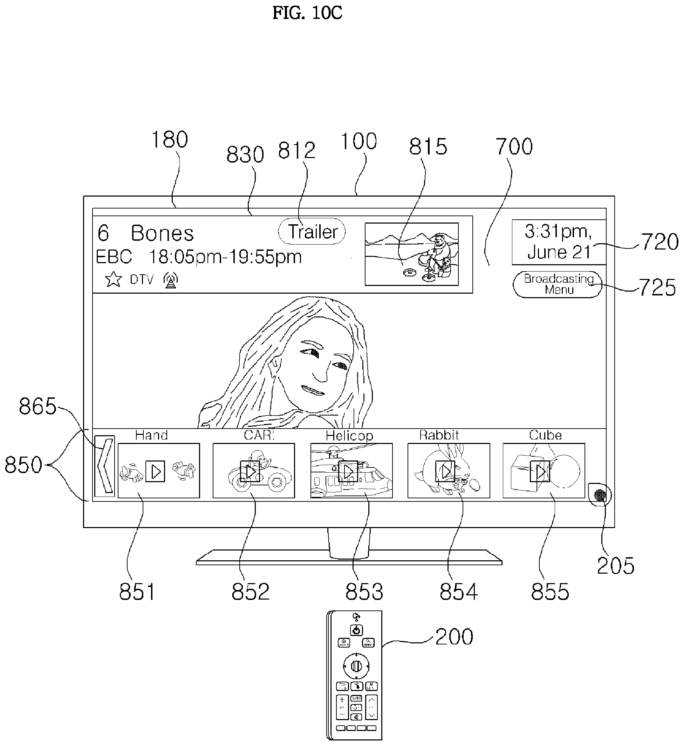

Upon selection of the TM item 746 from among various items in the play menu 740 for playing a broadcast trailer image, the controller 170 provides a plurality of broadcast trailer thumbnail images or a plurality of broadcast trailer images, which will be described with reference to FIGS. 10a, 10b, and 10c.

FIG. 10a is an exemplary view illustrating display of the broadcast program trailer image 930 and the play menu 740 for playing a trailer image, along with the advertisement image 700.

Upon selection of the TM mode 746 in the play menu 740 by means of the pointer 205 of the remote controller 200, a plurality of broadcast trailer thumbnail images or a plurality of broadcast trailer images may be displayed at a lower part of a screen, as illustrated in FIG. 10b.

FIG. 10b is an exemplary view illustrating display of a first thumbnail image list 840 with a plurality of thumbnail images related to trailers of broadcast programs and the forward item 855 at a lower part of a screen.

The first thumbnail image list 840 may include a plurality of thumbnail images 841 to 845. The plurality of thumbnail images 841 to 845 may have been received from the server 500 and stored in the memory 140.

The controller 170 may extract information about broadcast programs scheduled for the day from an EPG or the like, transmit the information about the broadcast programs to a plurality of broadcasting station severs, and receive thumbnail images related to trailers. Then, the controller 170 may control storing of each received thumbnail image as a part of trailer information in the memory 140.

Upon selection of the forward item 855 by means of the pointer 205 of the remote controller 200 in FIG. 10b, the second thumbnail image list 850 with a plurality of thumbnail images related to trailers of broadcast programs and the reverse item 855 at a lower part of a screen, as illustrated in FIG. 10c. Therefore, the user may browse the plurality of trailer thumbnail images, select one of the thumbnail images, and view a trailer image of a broadcast program related to the selected thumbnail image.

While upon selection of the trailer item 746, the controller 170 displays the thumbnail list 840 as a PIP image in FIG. 10a by way of example, the controller 170 may display the thumbnail list 840 as a PBP image, that is, by dividing a screen into a plurality of screens.

The controller 170 may control display of the thumbnail list 800a in a separate screen from the advertisement image 710 by screen division.

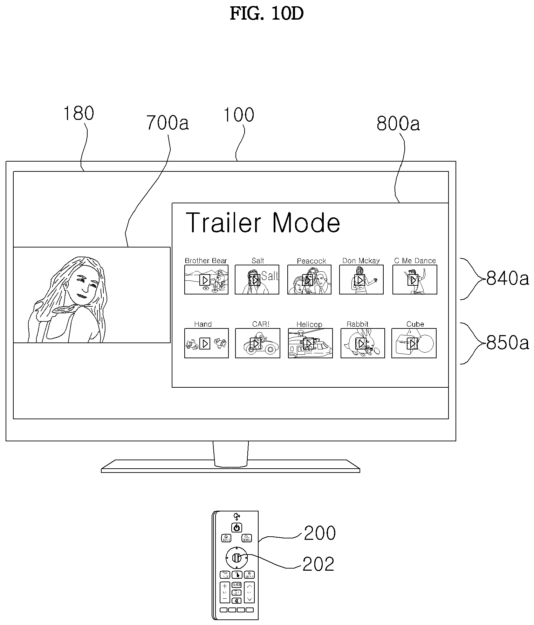

FIG. 10d is an exemplary view illustrating display of the scaled-down advertisement image 700a and the thumbnail list 800a corresponding to the TM.

That is, the thumbnail list 800a corresponding to the TM item 746a may be displayed. This thumbnail list 800a may be referred to as a trailer list.

The thumbnail list 800a may include the first and second thumbnail image lists 840a and 850a related to trailers of broadcast programs.

If one thumbnail image 841a is selected or focused in the thumbnail list 800a by means of the pointer 205 of the remote controller, the controller 170 may display a broadcast trailer image corresponding to the selected or focused thumbnail image on the display 180.

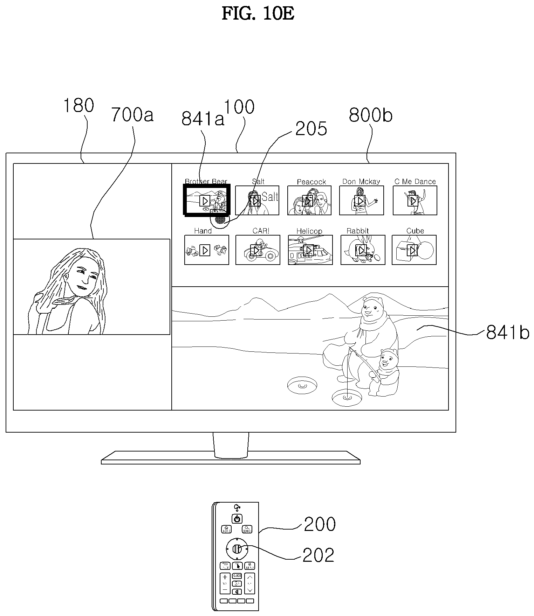

Particularly, the controller 170 may control display of the broadcast trailer image 841b, the scaled-down advertisement image 700a, and the thumbnail list 800b corresponding to the TM together in separate screens, as illustrated in FIG. 10e. Accordingly, the user may simply view an intended broadcast trailer image.

In another embodiment of the present disclosure, in response to an input for displaying an electronic program guide (EPG) during providing of a broadcast image based on a received BR, the controller 170 provides an EPG screen. Particularly, the controller 170 may display the EPG in full screen.

The EPG screen may include information about a plurality of broadcast program items. For a broadcast program item having a trailer, the EPG screen may include a trailer item.

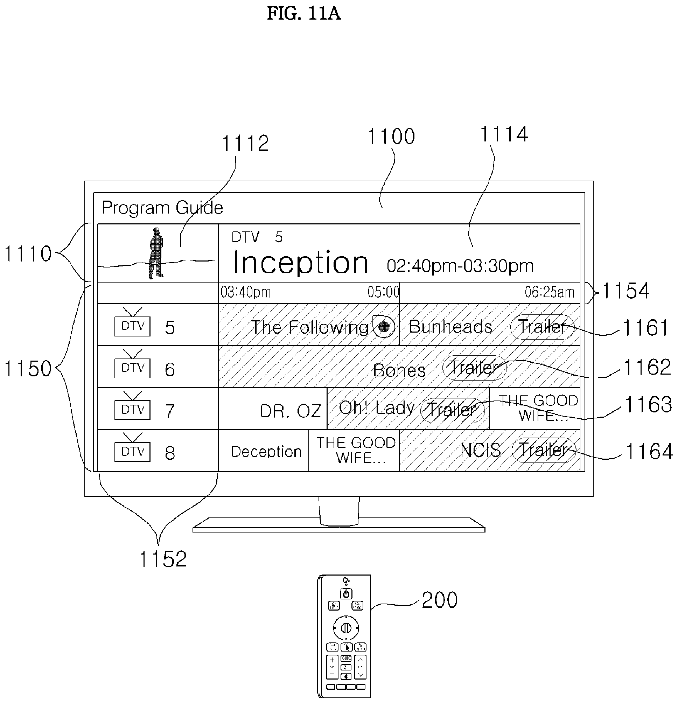

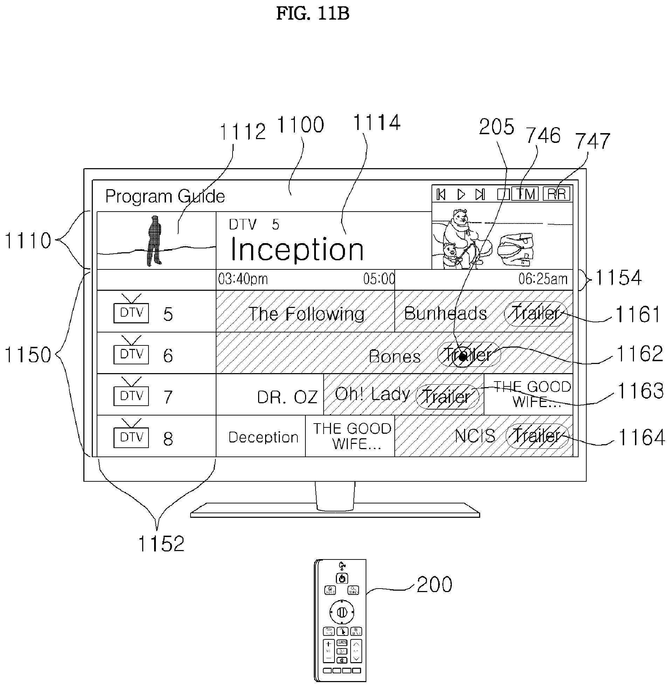

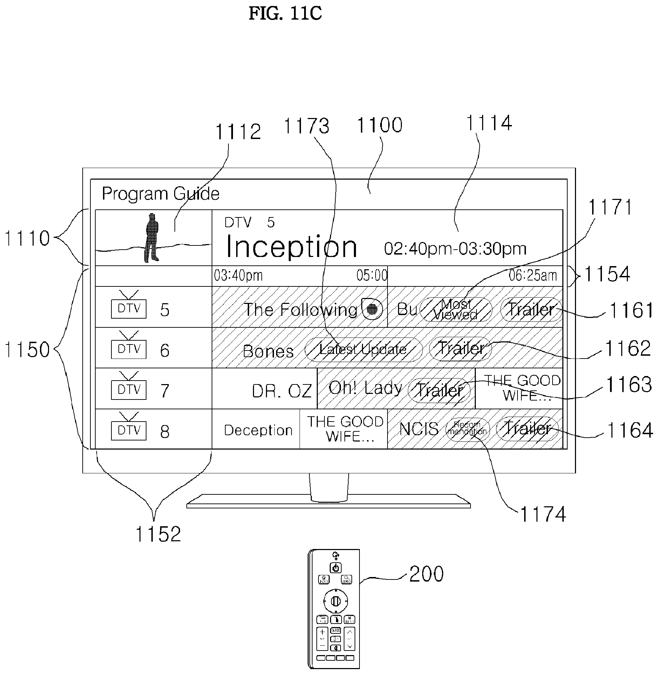

Upon selection of the trailer item with the EPG screen displayed, the controller 170 may provide a thumbnail image corresponding to the trailer item. Upon selection of the thumbnail image, the controller 170 may provide a broadcast trailer image corresponding to the selected thumbnail image. In response to a play input for the broadcast trailer image, the controller 170 may play and provide the broadcast trailer image, which will be described with reference to FIGS. 11a, 11b, and 11c.

FIG. 11a is an exemplary view illustrating display of an EPG screen, when an EPG key (not shown) is manipulated.

The OSD generator 340 of the controller 170 may generate an EPG screen based on a broadcast data signal included in a BR received through the tuner unit 110.

Meanwhile, the controller 170 may transmit an IRE for each broadcast program to a server managed by each broadcasting station or the like, and in the presence of trailer information, receive the trailer information from the server. Particularly, the controller 170 may receive trailer information including a thumbnail image.

When generating the EPG screen, the controller 170 may arrange an object representing a trailer item for a broadcast program having trailer information among a plurality of broadcast programs.

FIG. 11a is an exemplary view illustrating division of an EPG screen 1100 into a currently viewed broadcasting information area 1110, and a plurality of broadcasting information areas 1150.

The currently viewed broadcasting information area 1110 may include a thumbnail image 1112, channel information, broadcast program name information, and time information, for a currently viewed broadcast program.

The plurality of broadcasting information areas 1150 include a plurality of channel areas 1152, a time zone area 1154, and information about a plurality of broadcast programs and trailer items 1161, 1162, 1163, and 1164 for the respective broadcast programs by channel and by time.

Upon selection of one of the trailer items 1161, 1162, 1163, and 1164 by means of the pointer 205 of the remote controller 200, the controller 170 may control display of a thumbnail image related to the selected trailer item.

FIG. 11b is an exemplary view illustrating display of a thumbnail image related to the broadcast program 'Bones' along with a play menu in an upper part of a screen, when the trailer item 1163 of the broadcast program item 'Bones' is selected by means of the pointer 205 of the remote controller 200. The play menu may include the reverse item 741, the play item 742, the forward item 743, the pause item 744, the TM item 746, and the RR item 747, as described before. Therefore, the user may simply view a trailer of an intended broadcast program on the EPG screen 1100.

FIG. 11c illustrates another example of the EPG screen 1100 in which a most viewed item 1171, a latest update item 1173, and a recommended item 1174 are displayed in addition to a trailer item.

When receiving trailer information from the server 500 of each broadcasting station, the controller 170 may also receive most views information or most interest information. The controller 170 may control display of the most views information or the most interest information as the most viewed item 1171 as illustrated in FIG. 11c.

Similarly, when receiving trailer information from the server 500 of each broadcasting station, the controller 170 may also receive latest update information or recommended information, and control display of the latest update item 1173 and the recommended item 1174 corresponding to the latest update information or the recommended information.

Owing to display of such additional information, the user may select a trailer item with increased use convenience.

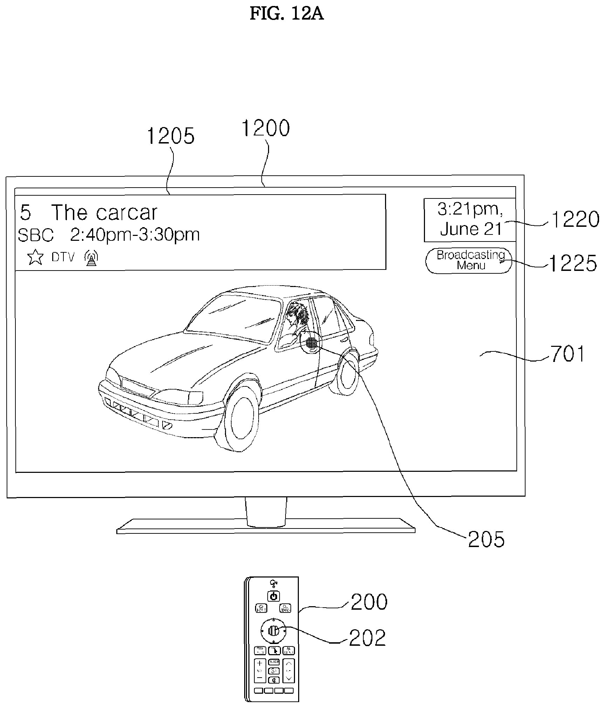

In response to an input for displaying broadcasting information during display of a broadcast image being a broadcast program image, the controller 170 may control display of broadcasting information about the corresponding broadcast program. In response to an input for displaying information about a next broadcast program during display of the broadcasting information, the controller 170 may control display of broadcasting information about the next broadcast program. In the presence of trailer information in the broadcasting information about the next broadcast program, the controller 170 may display a thumbnail image related to the trailer information, and provide a trailer image or a trailer video, which will be described with reference to FIGS. 12a to 12h.

FIG. 12a is an exemplary view illustrating display of a broadcast program image 701 for a current broadcast program on air. When the OK key 202 of the remote controller 200 is manipulated, a broadcasting information image 1205 including broadcasting information about the displayed broadcast program (`The carcar') may be displayed together with the broadcast image 701. Herein, the broadcasting information image 1205 may not include a trailer item.

If with the broadcasting information image 1205 displayed, the right key 203 of the remote controller 200 is manipulated, the broadcasting information image 710 including broadcasting information about a broadcast program following the current broadcast program may be displayed.

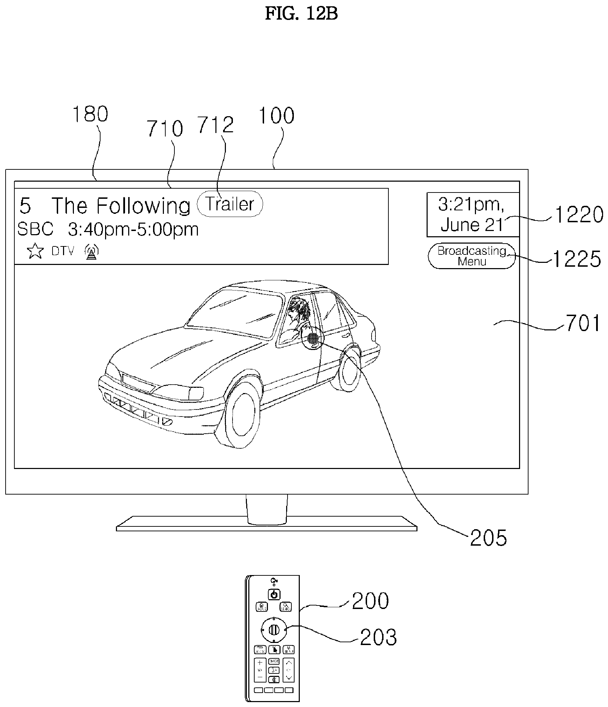

That is, the broadcasting information image 710 including broadcasting information about the next broadcast program ('The Following') may be displayed together with the broadcast image 701, as illustrated in FIG. 12b. The broadcasting information image 710 may include the trailer item 712.

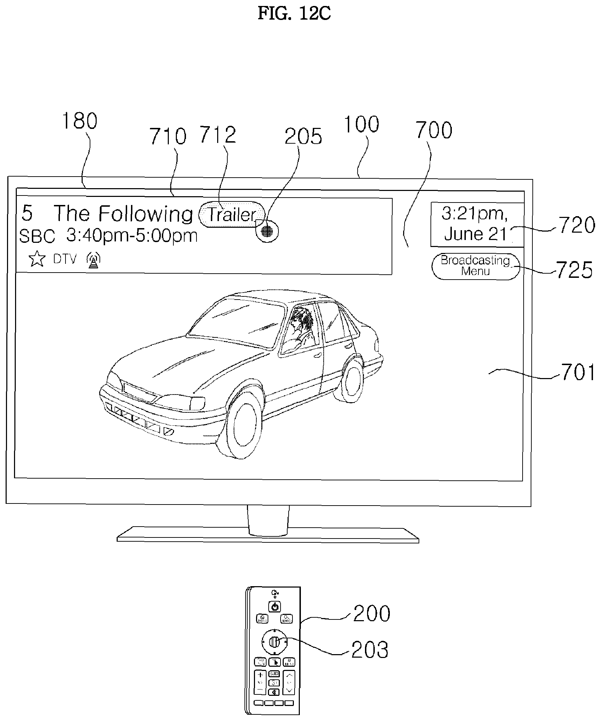

FIG. 12c is an exemplary view illustrating selection of the trailer item 712 by means of the pointer 205 of the remote controller 200.

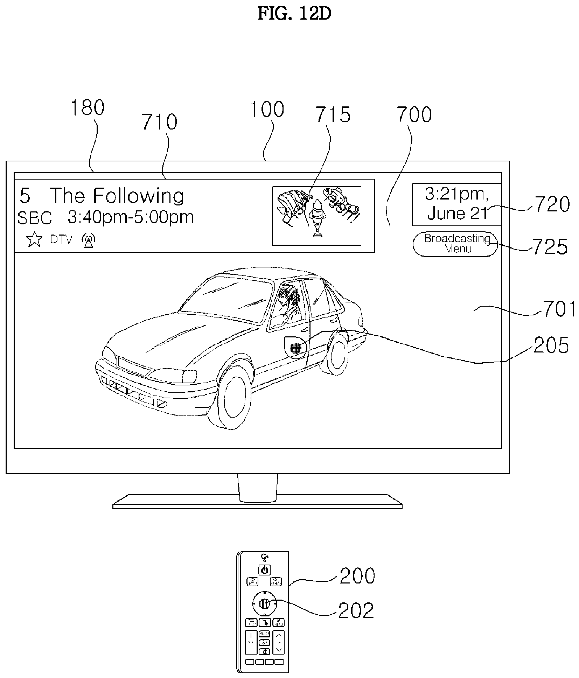

Accordingly, the thumbnail image 715 related to the next broadcast program (`The Following') may be displayed in the broadcasting information image 710, as illustrated in FIG. 12d.

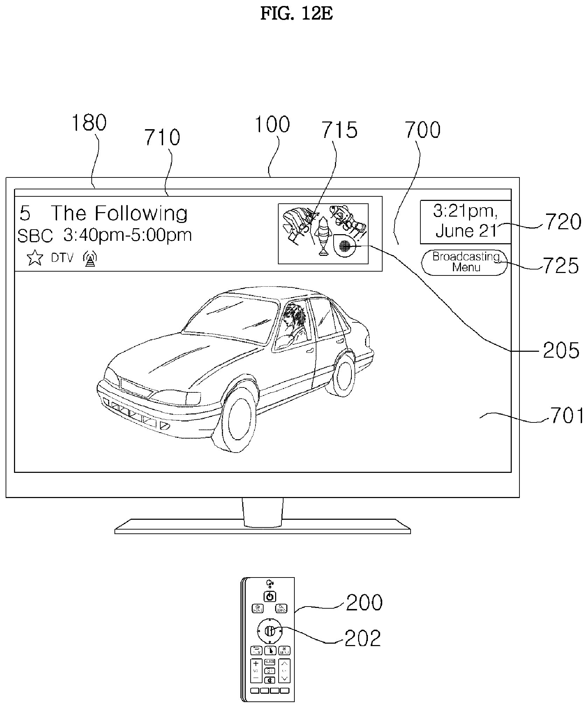

FIG. 12e is an exemplary view illustrating selection of the thumbnail image 715 by means of the pointer 205 of the remote controller 200.

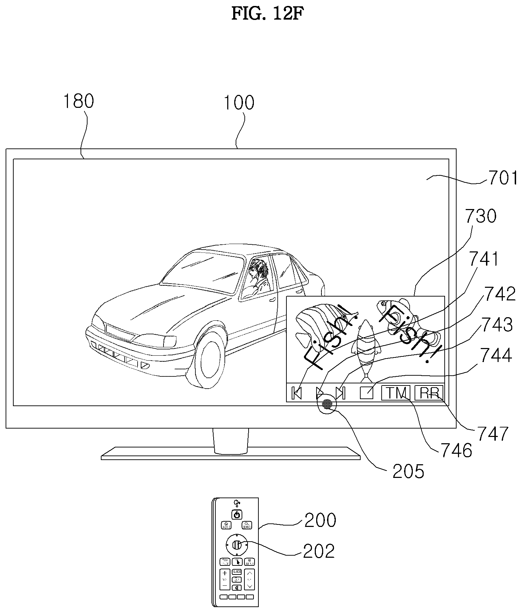

Therefore, the trailer image 730 related to the next broadcast program ('The Following') and the play menu 740 for playing a trailer image may be displayed separately from the broadcasting information image 710, as illustrated in FIG. 12f.

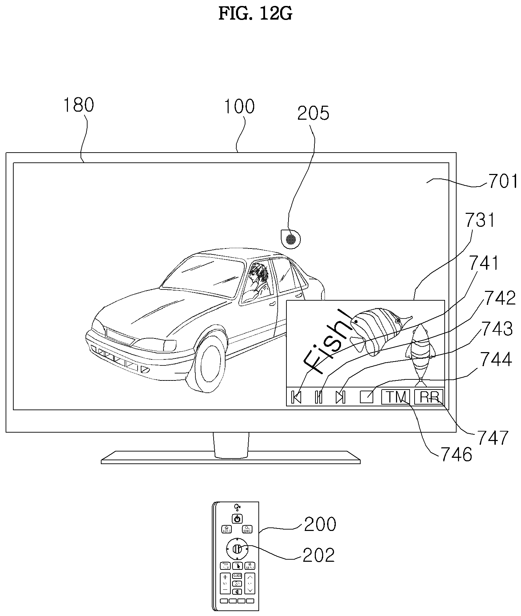

Upon selection of the play item 742 in the play menu 740 by the pointer 205 of the remote controller 200, the played broadcast trailer image 731 may be displayed together with the broadcast image 701 in a lower part of a screen, as illustrated in FIG. 12g. The play item 742 illustrated in FIG. 12f may be changed to and displayed as the pause item, as illustrated in FIG. 12g.

If the broadcast trailer image 731 is completely played or the pause item 744 is selected in the play menu 740, the played broadcast trailer image 731 or the broadcast trailer image 730 may disappear.

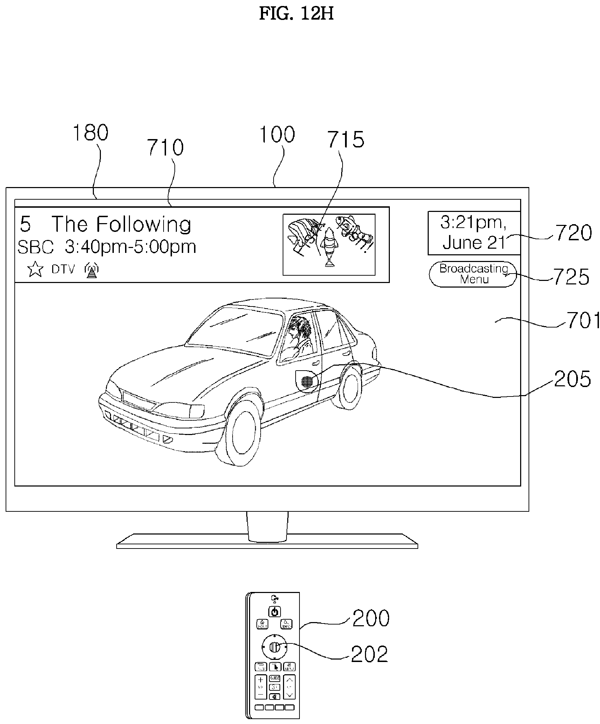

That is, the broadcast image 701 and the broadcasting information image 710 may be displayed together again, as illustrated in FIG. 12h. While the thumbnail image 715 related to the next broadcast program is shown in FIG. 12h as displayed inside the broadcasting information image 710 by way of example, it is also possible to display only the broadcasting information, as illustrated in FIG. 12b.

As illustrated in FIGS. 12a to 12h, the user may simply view a trailer image for the next broadcast program during viewing a broadcast program image, similarly to during viewing an advertisement image illustrated in FIGS. 7a to 7h. Accordingly, the use convenience of the user may be increased.

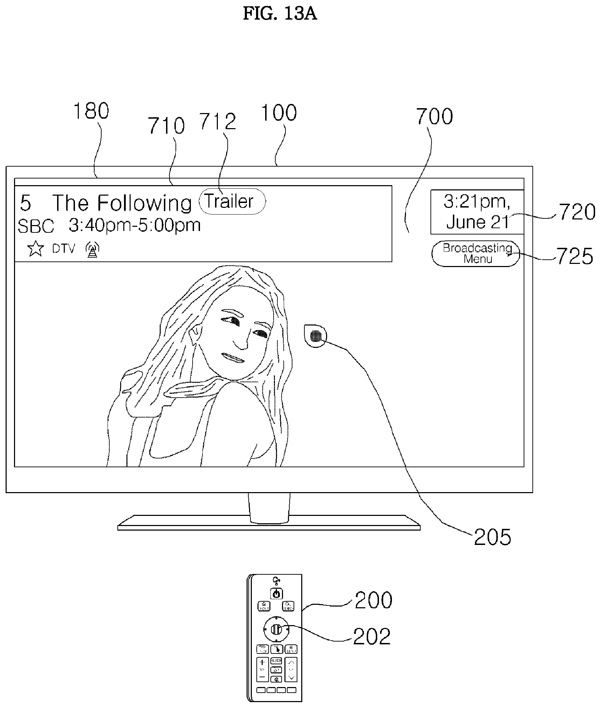

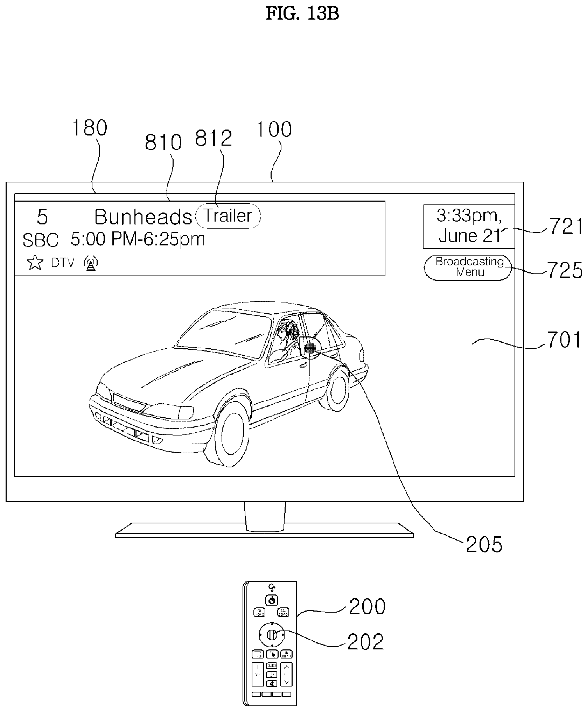

When providing a first advertisement image, the controller 170 may provide first broadcast program information and a first thumbnail image corresponding to the first broadcast program information together, and when providing a second advertisement image, the controller 170 may provide second broadcast program information and a second thumbnail image corresponding to the second broadcast program information together, which will be described with reference to FIGS. 13a and 13b.

FIG. 13a is an exemplary view illustrating display of the first broadcasting information image 710 including broadcasting information about the next broadcast program (`The Following') according to manipulation of the OK key 202 of the remote controller 200 at a first time (3:31 PM) when the first advertisement image 700 is displayed.

The second broadcasting information image 810 including a trailer item after the broadcast program (`The Following') may be displayed at a second time (3:33 PM) when the second advertisement image 710 is displayed after the first advertisement image 700, as illustrated in FIG. 13b.

Even though there is no other user input, the controller 170 may be aware of a display time of another advertisement image by image recognition or the like. When displaying the advertisement image, the controller 170 may control automatic display of information about the next broadcast program. Therefore, the use convenience of the user may be increased.

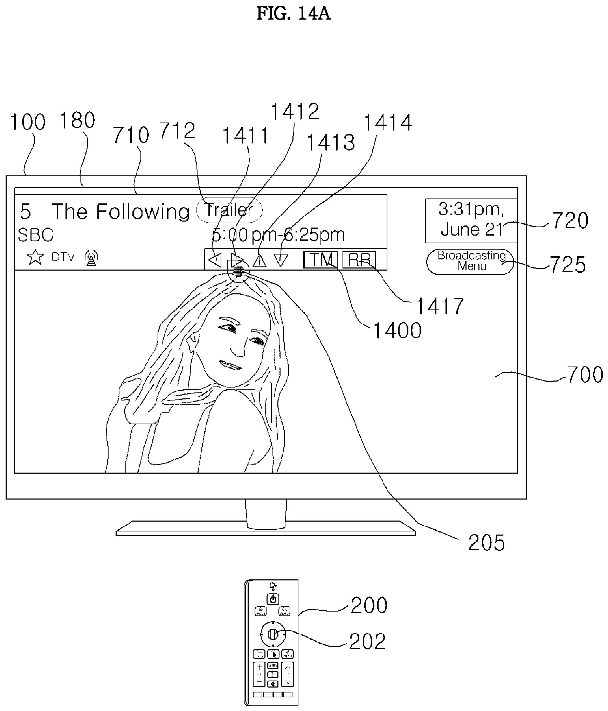

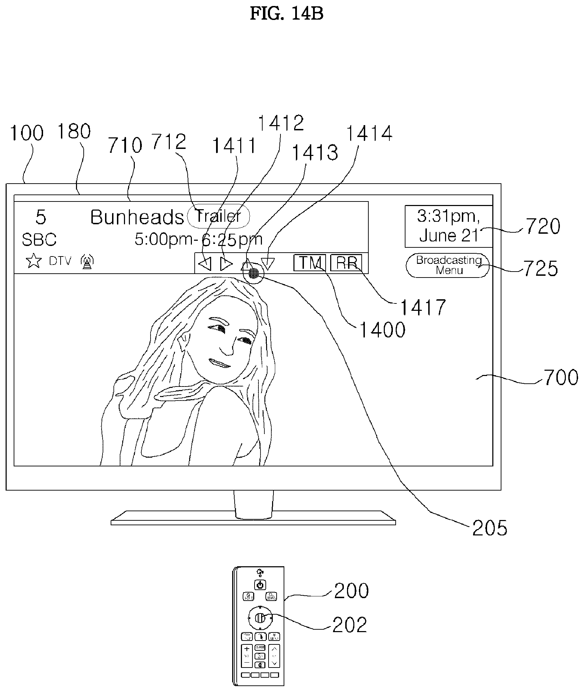

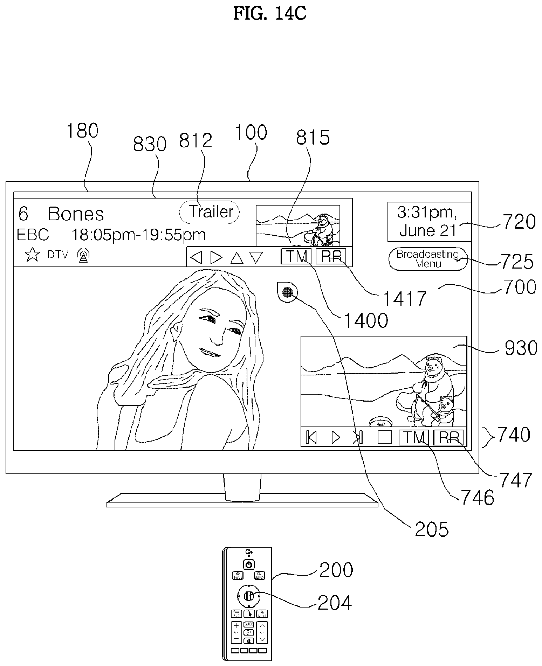

Meanwhile, the controller 170 may provide a menu for searching for information about the next broadcast program or information about a broadcast program on another channel, in a broadcasting information image, which will be described with reference to FIGS. 14a, 14b, and 14c.

FIG. 14a is an exemplary view illustrating display of the broadcasting information image 710 including broadcasting information about the next broadcast program (`The Following') according to manipulation of the OK key 202 of the remote controller 200 during display of the advertisement image 700.

The broadcasting information image 710 may include the trailer item 712 and a broadcast program information search menu 1400.

The broadcast program information search menu 1400 may include a same-channel broadcasting information reverse item 1411, a same-channel broadcasting information forward item 1412, a next-channel broadcasting information view item 1413, a previous-channel broadcasting information view item 1414, a TM item 1416, and an RR item 1417.

In FIG. 14a, a left-directional object as the same-channel broadcasting information reverse item 1411, a right-directional object as the same-channel broadcasting information forward item 1412, an up-directional object as the next-channel broadcasting information view item 1413, and a down-directional object as the previous-channel broadcasting information view item 1414 are displayed, by way of example.

Upon selection of the same-channel broadcasting information forward item 1412 by means of the pointer 205 of the remote controller 200, the broadcasting information image 710 including broadcasting information about the next broadcast program ('Bunheads') may be displayed, as illustrated in FIG. 14b.

Upon selection of the next-channel broadcasting information view item 1413 by means of the pointer 205 of the remote controller 200, the broadcasting information image 830 including broadcasting information about a broadcast program ('Bones') of channel 6 following channel 5 may be displayed, as illustrated in FIG. 14c. The broadcasting information image 830 may include a broadcast program name ('Bones'), time information ('18:05-19:55'), image quality type information ('DTV'), channel information (EBC), the trailer item 812, and the broadcast program information search item 1400, for the broadcast program of channel 6.

Upon selection of the trailer item 812, the thumbnail image 815 related to 'Bones' may be displayed. Upon selection of the thumbnail image 815, the trailer image 930 of 'Bones' and the menu 740 for playing a trailer image may be displayed.

While the trailer item 812, the thumbnail image 815, and the trailer image 930 are displayed simultaneously in FIG. 14c by way of example, the trailer item 812, the thumbnail image 815, and the trailer image 930 may be displayed sequentially.

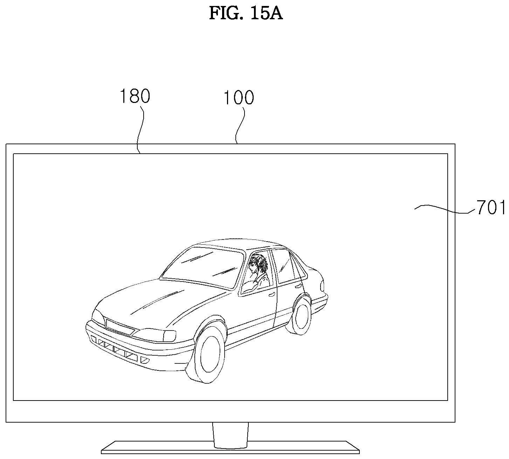

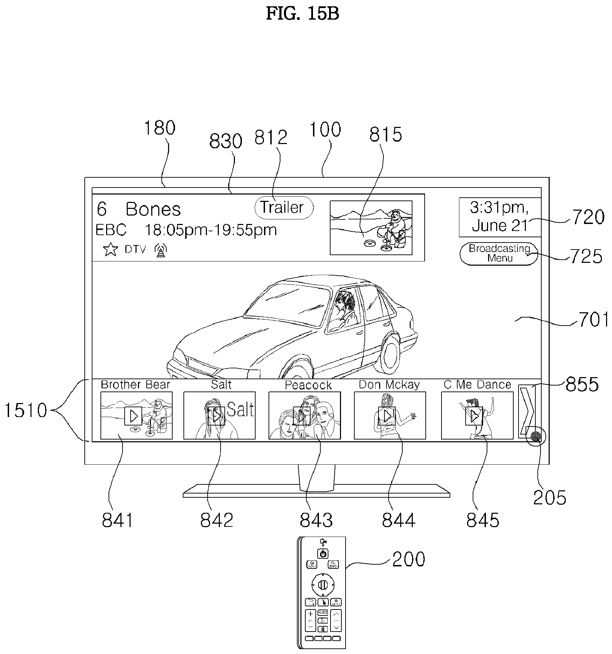

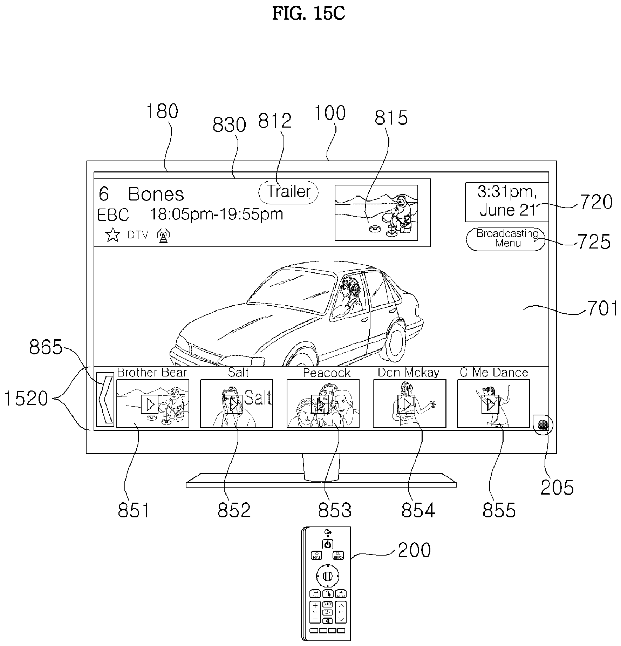

Meanwhile, in response to a view input for a broadcast trailer, the controller 170 may provide a plurality of broadcast trailer thumbnail images or a plurality of broadcast trailer images, which will be described with reference to FIGS. 15a, 15b, and 15c.

FIG. 15a is an exemplary view illustrating display of the advertisement image 701 on the display 180.

In response to a view input for broadcasting information by means of the OK key 202 of the remote controller 200, the broadcasting information image 830 including the trailer item 812 may be displayed, as illustrated in FIG. 15b.

Upon selection of the trailer item 812 by the pointer 205 of the remote controller 200, the thumbnail image 815 related to a related broadcast program may be displayed.

Herein, it is possible to display a first thumbnail list 1510 including the thumbnail images 841 to 845 related to trailers of a plurality of broadcast programs in a lower part of a screen.

The thumbnail images 841 to 845 may be displayed as it they were flowing from right to left in the lower part of the screen.

Accordingly, a second thumbnail list 1520 following the first thumbnail list 1510 may be displayed a predetermined time later, as illustrated in FIG. 15c.

In FIG. 15c, the second thumbnail list 1520 includes the thumbnail images 851 to 855 related to trailers of a plurality of broadcast programs. Therefore, the user may view thumbnail images related to a plurality of trailer images within a predetermined time, select an intended thumbnail image from among the thumbnail images, and view a trailer image corresponding to the selected thumbnail image. As a consequence, the use convenience of the user may be increased.

Unlike the above description, upon manipulation of the OK key 202 of the remote controller 200, the thumbnail images 841 to 845 related to the plurality of broadcast programs may be displayed without displaying a broadcasting information image. These thumbnail images 841 to 845 may be displayed as if they were flowing from right to left in a lower part of a screen. Therefore, the user may directly view the thumbnail images related to the trailers of the plurality of broadcast programs.

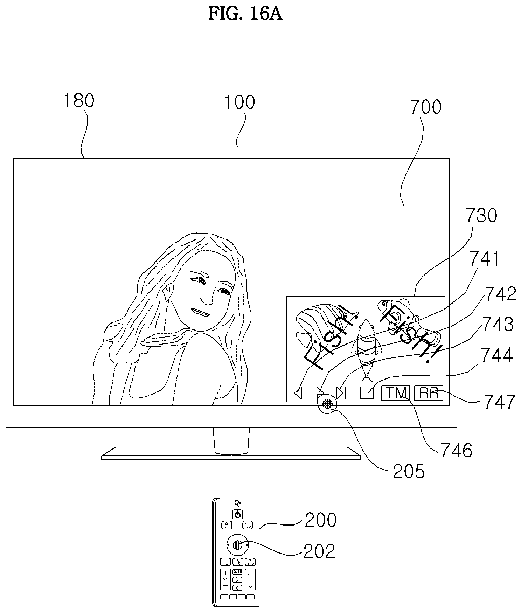

Meanwhile, in response to a zoom-in/zoom-out input or an image shift input with the broadcast trailer image 730 displayed according to selection of the trailer item, the controller 170 may control zoom-in/zoom-out or shift of the broadcast trailer image 730, which will be described with reference to FIGS. 16a to 16d.

FIG. 16a is an exemplary view illustrating display of the broadcast trailer image 730 corresponding to the thumbnail image 715, overlapped over a lower part of the advertisement image 700.

The controller 170 displays the pointer 205 of the remote controller 200 on the screen, and determines whether the pointer 205 is in the vicinity of the boundary of the broadcast trailer image 730. If the pointer 205 is in the vicinity of the boundary of the broadcast trailer image 730, the controller 170 may control display of an arrowed pointer 205a indicating that an image may be zoomed-in/zoomed-out.

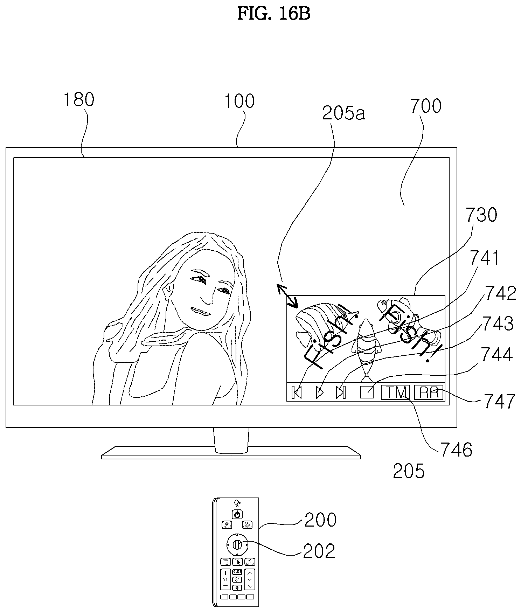

That is, if the pointer is positioned at an upper left edge of the broadcast trailer image 730, the arrowed pointer 205a may be displayed, as illustrated in FIG. 16b.

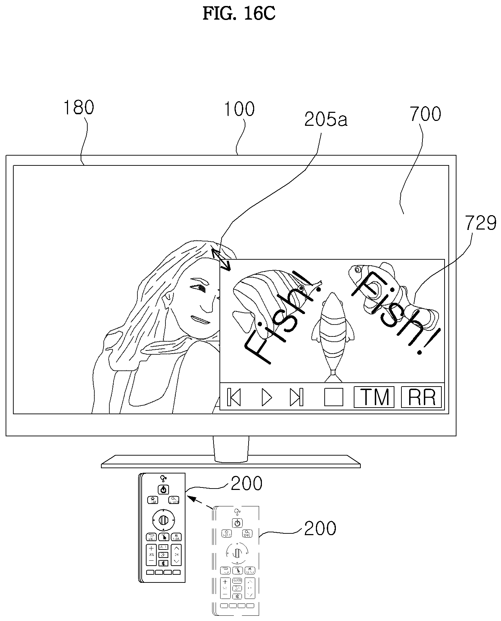

If the remote controller 200 moves in an upper left direction with the OK key 202 of the remote controller 205 manipulated, the upper left edge of the broadcast trailer image 730 may be dragged and zoomed-in, as illustrated in FIG. 16c. That is, a zoomed-in broadcast trailer image 729 may be displayed.

On the other hand, if the pointer 205 is disposed inside the broadcast trailer image 730 at a position other than the vicinity of the boundary of the broadcast trailer image 730, the controller 170 may control entry into a shift mode of the broadcast trailer image 730. That is, the controller 170 may control display of a hand-shaped pointer 205b representing movability.

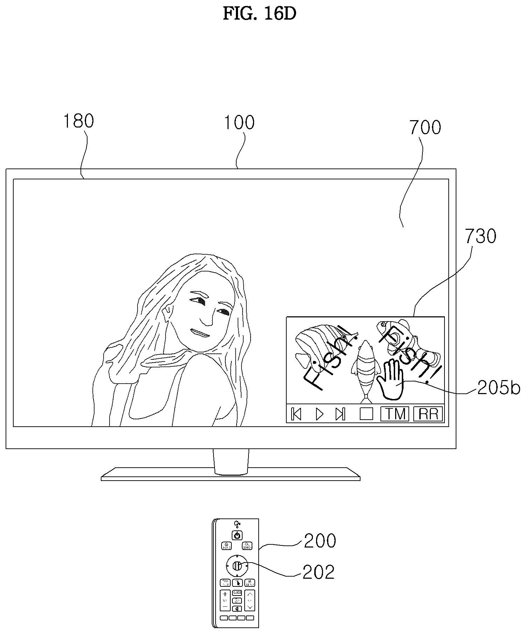

That is, if the pointer is disposed inside the broadcast trailer image 730, the hand-shaped pointer 205b may be displayed, as illustrated in FIG. 16d.

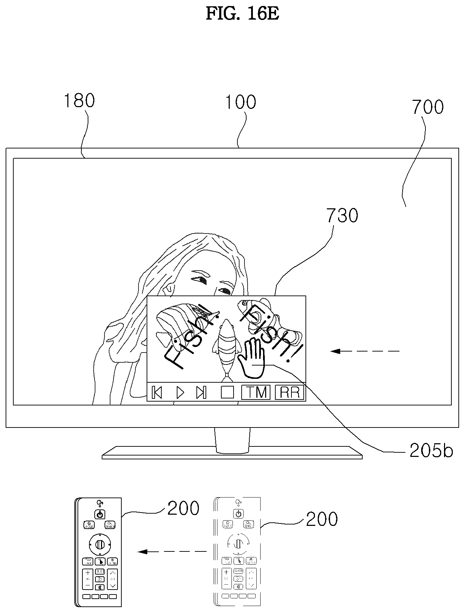

If the remote controller 200 moves to the left with the OK key 202 of the remote controller 205 manipulated, or if the left key (not shown) of the remote controller 200 is manipulated, the broadcast trailer image 730 may be shifted to the left, as illustrated in FIG. 16e.

As illustrated in FIG. 16a to 16e, zoom-in, zoom-out, or shift of the broadcast trailer image 730 may increase the use convenience of the user.

The method for operating an image providing apparatus according to the present disclosure may be implemented as processor-readable code that can be written on a processor-readable recording medium and thus read by a processor of the image providing apparatus. The processor-readable recording medium may be any type of recording device in which data is stored in a processor-readable manner. Examples of the processor-readable recording medium include a ROM, a RAM, a CD-ROM, a magnetic tape, a floppy disc, an optical data storage, and a carrier wave such as data transmission over the Internet. The processor-readable recording medium can be distributed over a plurality of computer systems connected to a network so that processor-readable code is written thereto and executed therefrom in a decentralized manner.

While the present disclosure has been particularly shown and described with reference to preferred embodiments thereof, it will be understood by those of ordinary skill in the art that the present disclosure is not limited to the foregoing specific embodiments, various modifications may be made therein without departing from the spirit and scope of the present disclosure, and these modified embodiments should not be understood individually from the spirit and scope of the present disclosure.

### Industrial Applicability

The present disclosure is applicable to an image providing apparatus, particularly to an image providing apparatus that enables viewing of a broadcast trailer.

## Claims

1. An image providing apparatus comprising:
a broadcasting receiver to receive a broadcast signal;
an interface unit to receive broadcast trailer information including a thumbnail image from a server; and
a controller to provide a broadcast image based on the received broadcast signal, providing the thumbnail image related to the received broadcast trailer information, upon selection of the thumbnail image, to provide a broadcast trailer image corresponding to the thumbnail image, and in response to a play input for the broadcast trailer image, to play and provide the broadcast trailer image.

2. The image providing apparatus according to claim 1, further comprising a user input interface to receive an OK key input of a remote controller,
wherein the controller provides broadcast program information based on the OK key input, and upon selection of a trailer item in the broadcast program information, provides the thumbnail image included in the received broadcast trailer information.

3. The image providing apparatus according to claim 2, wherein the thumbnail image is included and provided in the broadcast program information.

4. The image providing apparatus according to claim 2, wherein upon selection of the trailer item in the broadcast program information, the controller controls reception of the broadcast trailer information from the server.

5. The image providing apparatus according to claim 1, wherein when the controller provides the broadcast trailer image, the controller provides a menu including items for playing the broadcast trailer image and a trailer mode item, and upon selection of the trailer mode item, the controller provides a plurality of broadcast trailer thumbnail images or a plurality of broadcast trailer images.

6. The image providing apparatus according to claim 2, wherein in response to a view input for a trailer of a different broadcast program on a channel of the received broadcast signal, the controller provides information about the different broadcast program and a thumbnail image corresponding to the information about the different broadcast program.

7. The image providing apparatus according to claim 2, wherein in response to a view input for a trailer of a broadcast program on a different channel from a channel of the received broadcast signal, the controller provides information about the broadcast program on the different channel and a thumbnail image corresponding to the information about the broadcast program on the different channel.

8. The image providing apparatus according to claim 1, wherein in response to information about a plurality of broadcast trailers from the server, the controller provides a plurality of thumbnail images.

9. The image providing apparatus according to claim 2, wherein the broadcast image is an advertisement image after a broadcast program ends, and
wherein when the controller provides a first advertisement image, the controller provides first broadcast program information and a first thumbnail image corresponding to the first broadcast program information, and when the controller provides a second advertisement image, the controller provides second broadcast program information and a second thumbnail image corresponding to the second broadcast program information.

10. The image providing apparatus according to claim 1, further comprising:
an audio output unit; and
a user interface unit to receive motion information from the remote controller,
wherein the controller provides a pointer based on the motion information, outputs a sound corresponding to a played broadcast trailer image to the audio output unit if the pointer is positioned in the played broadcast trailer image, and outputs a sound corresponding to the broadcast image to the audio output unit if the pointer is positioned in the broadcast image other than the played broadcast trailer image.

11. The image providing apparatus according to claim 1, wherein the broadcast image is an advertisement image after a broadcast program ends.

12. The image providing apparatus according to claim 1, wherein after the broadcast trailer image is played, the controller controls display of a reserved recording item for reserved recording of a broadcast program related to the broadcast trailer image.

13. An image providing apparatus comprising;
a broadcasting receiver to receive a broadcast signal;
an interface unit to receive broadcast trailer information including a thumbnail image from a server; and
a controller to provide a broadcast image based on the received broadcast signal, and to provide an electronic program guide (EPG) screen in response to an EPG display input, and
wherein the EPG screen includes a trailer item for a broadcast program item having the broadcast trailer information.

14. The image providing apparatus according to claim 13, wherein upon selection of the trailer item, the controller provides a thumbnail image corresponding to the trailer item, upon selection of the thumbnail image, the controller provides a broadcast trailer image corresponding to the thumbnail image, in response to a play input for the broadcast trailer image, the controller plays and provides the broadcast trailer image, and in response to a reserved recording input for a broadcast program related to the broadcast trailer image, the controller controls reserved recording of the broadcast program.

15. A method for operating an image providing apparatus, the method comprising:
receiving a broadcast signal;
providing a broadcast image based on the received broadcast signal;
receiving broadcast trailer information including a thumbnail image from a server;
providing the thumbnail image related to the received broadcast trailer information;
upon selection of the thumbnail image, to provide a broadcast trailer image corresponding to the thumbnail image; and
in response to a play input for the broadcast trailer image, to play and provide the broadcast trailer image.

16. The method according to claim 15, further comprising:
receiving an OK key input of a remote controller; and
providing broadcast program information based on the OK key input,
wherein the providing of the thumbnail image comprises, upon selection of a trailer item in the broadcast program information, providing the thumbnail image included in the received broadcast trailer information.

17. The method according to claim 15, further comprising:
when the broadcast trailer image is provided, providing a menu including items for playing the broadcast trailer image and a trailer mode item;
upon selection of the trailer mode item, providing a plurality of broadcast trailer thumbnail images; and
upon selection of the reserved recording item, performing reserved recording of a broadcast program related to the broadcast trailer image.

18. The method according to claim 15, further comprising:
in response to a view input for a trailer of a different broadcast program on a channel of the received broadcast signal, providing information about the different broadcast program and a thumbnail image corresponding to the information about the different broadcast program; and
in response to a view input for a trailer of a broadcast program on a different channel from a channel of the received broadcast signal, providing information about the broadcast program on the different channel and a thumbnail image corresponding to the information about the broadcast program on the different channel.

19. The method according to claim 15, wherein the broadcast image is an advertisement image after a broadcast program ends, when a first advertisement image is provided, first broadcast program information and a first thumbnail image corresponding to the first broadcast program information are provided, and when a second advertisement image is provided, second broadcast program information and a second thumbnail image corresponding to the second broadcast program information are provided

20. The method according to claim 15, further comprising:
receiving motion information from a remote controller;
providing a pointer based on the motion information;
if the pointer is positioned in a played broadcast trailer image, outputting a sound corresponding to the played broadcast trailer image; and
if the pointer is positioned in the broadcast image other than the played broadcast trailer image, outputting a sound corresponding to the broadcast image.
